# EUROPÄISCHE PATENTSCHRIFT

(11) **EP 1 398 863 B1**
(45) Veröffentlichungstag und Bekanntmachung des Hinweises auf die Patenterteilung: **30.06.2010**
(21) Anmeldenummer: 03018660.5
(22) Anmeldetag: 21.08.2003
(51) Int. Cl.: H02K 7/18, F02B 71/04

(54) **Freikolbenvorrichtung mit elektrischem Lineartrieb**
Free piston device with electrically driven linear actuator
Piston libre avec entrainement linéaire électrique

(30) Priorität: 03.09.2002 DE 10242141
(43) Veröffentlichungstag der Anmeldung: 17.03.2004
(73) Patentinhaber: UMC Universal Motor Corporation GmbH, 70565 Stuttgart (DE)
(72) Erfinder: Gräf, Markus, Dr., 73760 Ostfildern (DE); Nedele, Martin, Dr., 72768 Reutlingen (DE); Gräf, Jürgen, 86163 Augsburg (DE)
(74) Vertreter: Regelmann, Thomas

(56) Entgegenhaltungen:
- EP-A- 1 077 318
- DE-A- 3 103 432
- DE-A- 4 136 099
- GB-A- 1 392 827
- US-A- 5 893 343
- US-A1- 2003 106 505

## Beschreibung

Die Erfindung betrifft eine Freikolbenvorrichtung mit elektrischem Lineartrieb, umfassend mindestens eine linear bewegliche Kolbeneinrichtung, eine Läufervorrichtung, welche mit der Kolbeneinrichtung verbunden ist, eine Statorvorrichtung, wobei die mindestens eine Kolbeneinrichtung unter der Wirkung eines Mediums, welches in einem Expansionsraum expandiert, antreibbar ist, einen ersten Verschiebungsraum, in welchem ein Kolben der mindestens einen Kolbeneinrichtung, auf den das Medium wirkt, beweglich ist, und einen zweiten Verschiebungsraum, in welchem die zugeordnete Läufervorrichtung beweglich ist, wobei der erste Verschiebungsraum und der zweite Verschiebungsraum getrennte Räume sind.

Eine Freikolbenvorrichtung mit elektrischem Lineartrieb, umfassend mindestens eine linear bewegliche Kolbeneinrichtung, eine Läufervorrichtung, welche mit der Kolbeneinrichtung verbunden ist, und eine Statorvorrichtung, wobei die mindestens eine Kolbeneinrichtung unter der Wirkung eines Mediums, welches in einem Expansionsraum expandiert, antreibbar ist, ist beispielsweise aus der DE 22 17 194 C3 bekannt.

Mit ihr läßt sich chemische Energie über Verbrennung teilweise in mechanische Energie, nämlich kinetische Energie einer Kolbeneinrichtung, umwandeln und diese mechanische Energie läßt sich dann wiederum über den Lineartrieb zumindest teilweise in elektrische Energie umwandeln. Durch eine Ausgestaltung der Kolbenbewegung als Freikolbenbewegung läßt sich eine reine Linearbeweglichkeit der Kolben der Kolbeneinrichtung realisieren, ohne daß eine Kurbelwelle vorgesehen werden muß.

Entsprechende Vorrichtungen können beispielsweise als Teil von Hybridantrieben für Kraftfahrzeuge eingesetzt werden und insbesondere im Zusammenhang mit seriellen Hybridkonzepten. Sie lassen sich auch als kompakte Stromerzeugungseinheit zur Generierung von Strom einsetzen oder auch in Zusammenhang mit stationären Anwendungen wie beispielsweise Blockheizkraftwerken einsetzen.

Verbrennungsvorrichtungen mit elektrischen Generatoren sind auch aus der US 6,199,519 B1, der DE 31 03 432 A1, der DDR-Patentschrift Nr. 113 593, der DE 43 44 915 A1 oder aus dem Artikel "ADVANCED INTERNAL COMBUSTION ENGINE RESEARCH" von P. Van Blarigan, Proceedings of the 2000 DOE Hydrogen Program Review, bekannt.

Aus der EP 1 077 318 A1 ist ein Stromgenerator bekannt, welcher eine Bank von vier Zylindern aufweist, welche als zwei entgegengesetzte Paare angeordnet sind.

Aus der US 5,893,343 ist ein autogener elektrischer Generator bekannt, welcher einen Zweitaktverbrennungsmotor umfasst, welcher für variable Kolbenhubbedingungen ausgebildet ist. Es ist eine Vorverbrennungskammer vorgesehen.

Eine Freikolbenvorrichtung, bei der der Kolbenhub über den Lineartrieb derart variabel einstellbar ist, daß die Umkehrpunkte der Bewegung der Kolbeneinrichtung definierbar sind, ist in der nicht-vorveröffentlichten DE 102 19 543 A1 offenbart. Auf diese Anmeldung wird hier ausdrücklich Bezug genommen.

Der Erfindung liegt die Aufgabe zugrunde, eine Freikolbenvorrichtung mit elektrischem Lineartrieb der eingangs genannten Art zu schaffen, welche eine optimierte Funktionsweise bezüglich des Antriebs der Kolbeneinrichtung und des elektrischen Lineartriebs aufweist.

Diese Aufgabe wird bei der eingangs genannten Freikolbenvorrichtung erfindungsgemäß dadurch gelöst, daß die Kolbeneinrichtung an einem Ende mit einem ersten Kolben einen Expansionsraum begrenzt und an einem gegenüberliegenden Ende mit einem zweiten Kolben einen Raum, welcher kein Expansionsraum ist und als Rückfederraum für die Kolbeneinrichtung ausgebildet ist, begrenzt und daß ein dritter Verschiebungsraum, in welchem sich der zweite Kolben bewegt, einen größeren Durchmesser aufweist als der erste Verschiebungsraum.

Bezüglich des Antriebs des Kolbens, auf den die Brenngase wirken, ist das Volumen einer Brennkammer die charakteristische Größe. Für die elektrische Leistungsdichte des Lineartriebs ist dagegen eine Luftspaltfläche zwischen der Läufervorrichtung und der Statorvorrichtung die charakteristische Größe. Bei aus dem Stand der Technik bekannten Freikolbenvorrichtungen liegen der Kolben, auf den das Medium wie beispielsweise Brenngase wirken, und die Läufervorrichtung in Reihe. Um eine große Luftspaltfläche zu erreichen, mußt die Läufervorrichtung entsprechend lang gebaut werden, was zu großen Längenabmessungen der Freikolbenvorrichtung mit elektrischem Lineartrieb führt.

Erfindungsgemäß ist es nun vorgesehen, daß die Läufervorrichtung in einem zweiten Verschiebungsraum bewegt wird, wobei dieser zweite Verschiebungsraum getrennt von dem ersten Verschiebungsraum ist. Dadurch lassen sich die entsprechenden Verschiebungsräume getrennt voneinander optimieren: Ein Brennraum als Beispiel eines Expansionsraums, in welchem Gase expandieren und die Kolbeneinrichtung antreiben, läßt sich bezüglich der Verbrennung und des Antriebs der Kolbeneinrichtung optimieren, während sich der zweite Verschiebungsraum bezüglich den elektrischen Eigenschaften des Lineartriebs optimieren läßt. Insbesondere läßt sich bezüglich des zweiten Verschiebungsraums eine große Luftspaltfläche erreichen, ohne daß die Gesamtlänge des Systems vergrößert werden muß bzw. bei gleicher Gesamtlänge des Systems läßt sich eine erhöhte Leistungsdichte erreichen.

Erfindungsgemäß sind somit der Kolben der mindestens einen Kolbeneinrichtung, auf den das Medium wie beispielsweise Brenngase wirken, und die Läufervorrichtung nicht hintereinander geführt, sondern diese sind parallel geführt.

Erfindungsgemäß läßt sich auch auf einfache Weise eine thermische Entkopplung zwischen der Läufervorrichtung und dem Kolben, auf den das expandierende Medium wirkt, erreichen, da der zweite Verschiebungsraum und der Expansionsraum beabstandet zueinander sind und insbesondere die Läufervorrichtung nicht in dem ersten Verschiebungsraum bewegt wird. Insbesondere wenn die Läufervorrichtung Permanentmagnete umfaßt, dann sind deren magnetische Eigenschaften temperaturkritisch und bei hohen Temperaturen ungünstig zur Generierung elektrischer Energie. Durch die Trennung von erstem Verschiebungsraum und zweitem Verschiebungsraum wird verhindert, daß sich hohe Temperaturen vom Expansionsraum (welcher ein Teil des ersten Verschiebungsraums ist) auf die Läufervorrichtung schädlich auswirken.

Insbesondere begrenzt die Kolbeneinrichtung an einem Ende mit einem ersten Kolben einen Expansionsraum und an einem gegenüberliegenden Ende mit einem zweiten Kolben einen Raum, welcher kein Expansionsraum ist. Der erste Kolben ist derjenige Kolben, auf den das expandierende Medium wirkt. Dadurch, daß der weitere begrenzte Raum kein Expansionsraum ist, ist es möglich, über die Steuerung des Kolbenhubs die Vorrichtung variabel einzustellen.

Der Nicht-Expansionsraum ist als Rückfederraum für die Kolbeneinrichtung ausgebildet. Über einen solchen Rückfederraum läßt sich die mechanische Energie während eines Arbeitstaktes aufnehmen, die nicht vom Lineartrieb ausgekoppelt wird. Die gespeicherte Energie kann beispielsweise beim 2-Takt-Betrieb zum Verdichten eines Brennstoff-Luft-Gemisches eingesetzt werden oder beim 4-Takt-Betrieb zum Ausstoßen der Abgase. In dem Rückfederraum ist ein komprimierbares Element und/oder Medium aufgenommen, welches entsprechend die mechanische Energie aufnimmt und dann wieder abgibt. Bei dem komprimierbaren Element kann es sich um ein mechanisches Element und insbesondere eine Kompressionsfeder handeln. Bei dem komprimierbaren Medium handelt es sich um ein komprimierbares Fluid wie beispielsweise Luft. Es ist dann vorgesehen, daß der Druck im Rückfederraum einstellbar und/oder steuerbar und/oder regelbar ist, um so die "elastischen" Eigenschaften des Mediums einzustellen.

Es ist ein dritter Verschiebungsraum vorgesehen, in welchem sich der zweite Kolben bewegt, wobei der dritte Verschiebungsraum einen größeren Durchmesser aufweist als der erste Verschiebungsraum. Dadurch läßt sich ein großes Volumen für den Rückfederraum realisieren, wodurch wiederum, wenn beispielsweise Luft als komprimierbares Medium eingesetzt wird, der Wirkungsgrad der Energiespeicherung groß ist, da das Druckniveau entsprechend niedriger legbar st.

Insbesondere ist es vorteilhaft, wenn die mindestens eine Kolbeneinrichtung und die Läufervorrichtung parallel geführt sind, so daß eine Entkopplung zwischen dem ersten Verschiebungsraum und dem zweiten Verschiebungsraum realisierbar ist. Es lassen sich dann auch Kühlungen zwischen dem ersten Verschiebungsraum und dem zweiten Verschiebungsraum anordnen, über die gleichzeitig die Statorvorrichtung, ein Expansionsraum und ein Zylinderkopf kühlbar sind.

Günstig ist es, wenn der zweite Verschiebungsraum zumindest teilweise den ersten Verschiebungsraum umgibt. Dadurch läßt sich eine bezogen auf eine Länge der Freikolbenvorrichtung mit elektrischem Lineartrieb platzsparende Bauform realisieren.

Günstig ist es, wenn der erste Verschiebungsraum (Zylinderraum) einen kreisförmigen Querschnitt aufweist, um eine optimale Führung der Kolbeneinrichtung in diesem zu erreichen.

Der zweite Verschiebungsraum weist beispielsweise einen ringförmigen oder einen kreisförmigen Querschnitt auf. Grundsätzlich ist der zweite Verschiebungsraum so ausgebildet, daß die Kraft des Lineartriebs optimiert ist. Entsprechend ist der zweite Verschiebungsraum angepaßt an die Ausbildung der Läufervorrichtung und insbesondere an deren Ausbildung mittels Magnetelementen und Flußleitelementen.

Günstigerweise fällt eine Symmetrieachse des ersten Verschiebungsraums mit einer Symmetrieachse eines Expansionsraums zusammen. Dadurch läßt sich ein optimierter Antrieb der Kolbeneinrichtung über den Kolben, auf den das expandierende Medium wirkt, erreichen.

Ganz besonders vorteilhaft ist es, wenn die Läufervorrichtung, welche der mindestens einen Kolbeneinrichtung zugeordnet ist, einen Querabstand zu der Kolbeneinrichtung bezogen auf eine Achse der Kolbeneinrichtung aufweist, welche größer ist als die Querausdehnung des ersten Verschiebungsraums in Richtung des Querabstandes. Die Läufervorrichtung ist dann als Außenläufer ausgebildet, welche bezogen auf die Symmetrieachse des Verschiebungsraums in einem äußeren Bereich der Freikolbenvorrichtung liegt. Dadurch läßt sich eine hohe Leistungsdichte für die Stromgenerierung erreichen. Die Läufervorrichtung kann eine Mehrzahl von Läuferreihen mit entsprechenden Magnetelementen und Flußleitelementen umfassen, wobei diese Läuferreihen in einem Querabstand zu dem ersten Verschiebungsraum angeordnet sind.

Günstigerweise ist die Läufervorrichtung symmetrisch bezüglich einer Achse des ersten Verschiebungsraums angeordnet, um eine bezüglich Querrichtungen zur Symmetrieachse des ersten Verschiebungsraums symmetrische Führung der Kolbeneinrichtung zu erhalten.

Es kann vorgesehen sein, daß der zweite Verschiebungsraum ein in sich zusammenhängender Raum ist, der beispielsweise torusförmig ausgestaltet ist. Es kann auch vorgesehen sein, daß der zweite Verschiebungsraum eine Mehrzahl von Teilräumen umfaßt, wobei dann die Läufervorrichtung eine Mehrzahl von Teilläufern umfaßt, wobei jeder Teilläufer in einem Teilraum verschieblich geführt ist. Ist dabei jedem Teilraum auch eine eigene Spule als Teil der Statorvorrichtung zugeordnet, so läßt sich eine hohe elektrische Leistungsdichte erreichen.

Es kann vorgesehen sein, daß die Statorvorrichtung um den zweiten Verschiebungsraum oder um Teilräume des zweiten Verschiebungsraums angeordnet ist. Die Statorvorrichtung weist dann Spulenwindungen auf, welche bezogen auf die Symmetrieachse des ersten Verschiebungsraums außerhalb des zweiten Verschiebungsraums liegen, das heißt den zweiten Verschiebungsraum umgeben. Dadurch läßt sich eine hohe elektrische Leistungsdichte des Lineartriebs erreichen.

Es kann auch vorgesehen sein, daß die Statorvorrichtung um den ersten Verschiebungsraum angeordnet ist. Entsprechenden Spulenwindungen liegen dann zwischen dem zweiten Verschiebungsraum und dem ersten Verschiebungsraum. Diese Spulenwicklungen lassen sich als Außenwicklungen auf einfache Weise herstellen. Über eine Kühlungsvorrichtung lassen sich sowohl ein Expansionsraum als Teil des ersten Verschiebungsraums als auch die Statorvorrichtung kühlen, wenn eben die Kühlkanäle zwischen dem ersten Verschiebungsraum und der Statorvorrichtung angeordnet sind.

Es kann auch vorgesehen sein, daß um die Stator-Vorrichtung eine Kühlung angeordnet ist, um diese zu kühlen und so eine optimale Leistungsauskopplung aus dem Lineartrieb bzw. eine optimale Leistungseinkopplung in diesen zu erhalten.

Zwischen der Läufervorrichtung und der Statorvorrichtung ist ein Luftspalt gebildet. Durch die Luftspaltfläche bzw. Luftspaltoberfläche ist die Kraft des Lineartriebs bestimmt. Da erfindungsgemäß der zweite Verschiebungsraum von dem ersten Verschiebungsraum getrennt ist, läßt sich über die Ausgestaltung der Läufervorrichtungen über die Ausgestaltung des zweiten Verschiebungsraums die Leistungsdichte des Lineartriebs optimal an die gewünschten Anwendungen anpassen.

Vorteilhafterweise umfaßt die Läufervorrichtung eine oder mehrere Reihen von hintereinander angeordneten Magnetelementen. Insbesondere sind dabei zwischen benachbarten Magnetelementen Flußleitelemente angeordnet. Auf diese Weise lassen sich die Feldlinien von benachbarten Magnetelementen konzentrieren, wodurch wiederum die Leistungsdichte des Systems der Läufervorrichtung optimierbar ist, das heißt hohe Werte annehmen kann. Es lassen sich dann auch kostengünstige Magnetelemente mit geringerer Remanenzinduktion einsetzen, um trotzdem noch eine hohe Leistungsdichte zu erzielen. Werden eine Mehrzahl von Reihen solcher Magnetelemente vorgesehen und ist dabei jeder Reihe eine eigene Spule als Teilstator zugeordnet dann läßt sich so über eine mehrfache Spulenanordnung die Kraftdichte des Lineartriebs erhöhen; dadurch kann die Länge der Läufervorrichtung entsprechend verkürzt werden und Gewicht eingespart werden.

Bei einer Variante eines Ausführungsbeispiels sitzt eine Läuferreihe an einem Leistenelement, welches einem der Statorvorrichtung zugewandten Luftspalt gegenüberliegend angeordnet ist. Über ein solches Leistenelement läßt sich ein mechanisch sicherer Aufbau der Läufervorrichtung realisieren, da die entsprechenden Magnetelemente zumindest einseitig sicher gehalten werden. Der Luftspalt ist der Statorvorrichtung zugewandt und insbesondere der Symmetrieachse des ersten Verschiebungsraums zugewandt. Dadurch ergibt sich wiederum ein selbstsichernder Halt.

Insbesondere ist es vorgesehen, daß der Kolbenhub über den Lineartrieb derart variabel einstellbar ist, daß die Totpunkte der Bewegung der Kolbeneinrichtung definierbar sind. Dadurch, daß der Kolbenhub über entsprechende elektrische Beaufschlagung des Lineartriebs variabel einstellbar ist, läßt sich die Bewegung der mindestens einen Kolbeneinrichtung so einstellen, daß die für die jeweilige Anwendung optimalen Bedingungen herrschen. Durch einen variablen Kolbenhub läßt sich eine variable Verdichtung erreichen; es lassen sich nämlich die Umkehrpunkte (OT und UT) der Bewegung eines Verdichterkolbens (des ersten Kolbens der Kolbeneinrichtung) gezielt einstellen. Dadurch läßt sich die Vorrichtung in jedem Lastbetrieb optimal betreiben. Bei Volllast beispielsweise muß eine große Gasmenge angesaugt werden. Es ist deshalb ein großer Expansionsraum erforderlich und damit auch ein großer Kolbenhub.

Im Teillastbetrieb dagegen ist das Ansaugvolumen reduziert und das Volumen deshalb zu verringern.

Der Lineartrieb kann dann auch die Inbetriebnahme der Vorrichtung unterstützen, indem beispielsweise die Anfangsverdichtung über den Lineartrieb gesteuert wird. Über eine Steuerung/Regelung des Lineartriebs läßt sich gezielt die gewünschte Bewegungsform der Kolbeneinrichtung einstellen; der gewünschte Umkehrpunkt, die Kolbengeschwindigkeit und die Verdichtung lassen sich jeweils einstellen, so daß sich insbesondere im Teillastbetrieb verbesserte Teillastwirkungsgrade erreichen lassen, da keine Drosselklappe notwendig ist.

Durch eine gezielte Vorgabe von Strömen in der Statorvorrichtung läßt sich damit der Betriebspunkt der Vorrichtung genau festlegen. Auf diese Weise kann dann der Brennraum optimal an die Anwendung angepaßt werden, das heißt insbesondere das Volumen und die Oberfläche des Expansionsraums lassen sich gezielt anpassen, um so die Verbrennung zu optimieren. Dadurch wiederum ergeben sich umfangreiche Steuerungs- und Regelungsmöglichkeiten. So ist es möglich, die Vorrichtung mit unterschiedlichen Medien und insbesondere unterschiedlichen Brennstoffen zu betreiben, das heißt die Vorrichtung ist vielstofftauglich. Es ist dabei auch keine Umstellung der Vorrichtung als solche erforderlich, das heißt die Anpassung an einen bestimmten Kraftstoff wie Pflanzenöl oder Diesel (Diesel-Prinzip) oder Normal- oder Superbenzin (Otto-Prinzip) oder Wasserstoff oder Erdgas läßt sich "online" durchführen, indem entsprechend der Kolbenhub über beispielsweise Strombeaufschlagung der jeweiligen Statorvorrichtung eingestellt wird. Es ist sogar möglich, einen kombinierten Otto-Diesel-Motor mit der erfindungsgemäßen Vorrichtung zu realisieren. Es ist beispielsweise auch möglich, zwischen 2-Takt-Betrieb und 4-Takt-Betrieb zu wechseln.

Eine Kolbenaufnahme kann dabei einen konstanten Innendurchmesser oder einen variierenden Durchmesser aufweisen und beispielsweise abgestuft ausgebildet sein. Mehrere Kolbenaufnahmen können vorgesehen sein, wobei Kolbenaufnahmen paketartig oder auch V-förmig angeordnet sein können.

Insbesondere ist es vorteilhaft, wenn die Totpunkte örtlich bezüglich der Kolbenaufnahme definierbar sind, um so über eine entsprechende Einstellung die Verdichtung des Systems festlegen zu können. Es ist dann auch vorteilhaft, wenn die Totpunkte für die Bewegung der Kolbeneinrichtung zeitlich definierbar sind. Dadurch wiederum läßt sich auch eine Bewegung der mindestens einen Kolbeneinrichtung einstellen, welche eine konstante Periode aufweist. Dies ermöglicht es beispielsweise, Druckwellenlader für einen Expansionsraum einzusetzen. Ganz besonders vorteilhaft ist es, wenn die Bewegung der Kolbeneinrichtung so variabel einstellbar ist, daß der Ort der Kolbeneinrichtung zu jedem Zeitpunkt definierbar ist. Als Sonderfall ist insbesondere die Kolbengeschwindigkeit einstellbar. Auf diese Weise läßt sich bei entsprechender Vorgabe der Bewegungsformen der mindestens einen Kolbeneinrichtung über den Lineartrieb eine optimale Anpassung an die jeweiligen Betriebsparameter erzielen, wobei diese Betriebsparameter insbesondere durch den verwendeten Brennstoff bestimmt sind, durch Lastzustand und weitere Parameter. Günstig ist es, wenn oberer Totpunkt und unterer Totpunkt des Kolbenhubs der Kolbeneinrichtung definierbar sind, um so eine optimale Anpassung herstellen zu können.

Weiterhin ist es günstig, wenn die Verdichtung im Expansionsraum über den Lineartrieb einstellbar ist, um so eine Optimierung des Systems erreichen zu können. Dadurch läßt sich eben entsprechend ein Betriebspunkt des Systems variabel einstellen. Insbesondere ist dann der Expansionsraum vor allem hinsichtlich Volumen und Oberfläche einstellbar, um so die entsprechende Anpassung herstellen zu können und um die Verbrennungsvorgänge optimieren zu können.

Im Zusammenhang mit der variablen Einstellbarkeit des Kolbenhubs über den Lineartrieb wird auf die nicht-vorveröffentlichte deutsche Patentanmeldung Nr. 102 19 549.8 vom 25. April 2002 des gleichen Anmelders ausdrücklich Bezug genommen.

Insbesondere weist der dritte Verschiebungsraum, in welchem der zweite Kolben beweglich ist, einen kreisförmigen Querschnitt auf, um so eine optimale Führung der Kolbeneinrichtung zu realisieren.

Es kann vorgesehen sein, daß zweiter Verschiebungsraum und dritter Verschiebungsraum überlappen, das heißt ein Teil des zweiten Verschiebungsraums in dem ersten Verschiebungsraum angeordnet ist. Dies ist insbesondere der Fall, wenn die Läufervorrichtung eine oder mehrere Läuferreihen umfaßt, welche mit dem zweiten Kolben und insbesondere mit einer Rückseite des zweiten Kolbens verbunden sind.

Bei einer Variante einer Ausführungsform weist der zweite Kolben eine größere Oberfläche zu dem Nicht-Expansionsraum hin auf als der erste Kolben zu dem Expansionsraum hin. Dadurch läßt sich wie bereits oben erwähnt ein hohes Volumen für den Rückfederraum erreichen, um so einen hohen Wirkungsgrad zu erzielen.

Bei einer Variante einer Ausführungsform ist es vorgesehen, daß die Läufervorrichtung mit dem zweiten Kolben verbunden ist. Dadurch läßt sich ein einfacher mechanischer Aufbau der entsprechenden Freikolbenvorrichtung mit Lineartrieb erreichen. Weiterhin läßt sich dadurch der zweite Kolben mit einem großen Durchmesser ausbilden, um so für den Rückfederraum ein hohes Volumen bereitzustellen, um damit, wie oben beschrieben, für die Energieeinspeicherung einen hohen Wirkungsgrad erreichen zu können.

Bei einer Variante einer Ausführungsform sind der erste Kolben und der zweite Kolben über eine Kolbenstange verbunden, um so die Kolbeneinrichtung zu bilden. Auf diese Weise läßt sich eine fertigungstechnisch einfache feste starre Verbindung zwischen den beiden Kolben realisieren.

Bei einer weiteren Variante einer Ausführungsform ist ein dritter Verschiebungsraum, in welchem sich der zweite Kolben bewegt, nicht mit dem zweiten Verschiebungsraum überlappend, das heißt der dritte Verschiebungsraum und der zweite Verschiebungsraum sind getrennte Räume. Durch Entkopplung von drittem Verschiebungsraum und zweitem Verschiebungsraum lassen sich große Längen für die Läufervorrichtung realisieren, um so große Läuferlängen und damit große Oberflächen für die elektromagnetische Kraftbildung zu erreichen.

Bei einer Variante einer Ausführungsform sind der erste Kolben und der zweite Kolben durch eine gemeinsame Kolbenplatte gebildet, so daß der erste Kolben im wesentlichen die Rückseite des zweiten Kolbens darstellt und der zweite Kolben im wesentlichen die Rückseite des ersten Kolbens. Im Bereich des zweiten Kolbens weist die Kolbeneinrichtung zur Bildung des Nicht-Expansionsraums eine Ausnehmung auf. Über diese Ausnehmung läßt sich dann der Rückfederraum ausbilden, so daß für diesen die Gesamtlänge des Systems nicht vergrößert werden muß. Der Rückfederraum läßt sich damit gewissermaßen in die Kolbeneinrichtung integrieren.

Insbesondere ist die Ausnehmung zwischen Seitenwänden der Kolbeneinrichtung gebildet, wobei die Läufervorrichtung über die Seitenwände an der Kolbeneinrichtung gehalten ist. Damit läßt sich auch ein Ventil für den Rückfederraum in ein Gehäuse der Vorrichtung integrieren, wobei dieses Ventil eben in die Ausnehmung hineinragt. Es läßt sich so eine größere Unabhängigkeit der Geometrieparameter Länge und Durchmesser der Freikolbenvorrichtung erhalten. Es läßt sich auch die Läufervorrichtung in einem Außengehäuse lagern.

Die Längsabmessungen der erfindungsgemäßen Freikolbenvorrichtung sind wesentlich durch die Längsabmessung der Läufervorrichtung bestimmt und dabei insbesondere durch die Längsabmessungen des zweiten Verschiebungsraums, in welchem die Läufervorrichtung beweglich gelagert ist. Es kann dabei die Statorvorrichtung länger sein als die Läufervorrichtung oder die Läufervorrichtung länger als die Statorvorrichtung.

Bei einer weiteren Variante einer Ausführungsform ist zwischen dem ersten Verschiebungsraum und dem dritten Verschiebungsraum für den zweiten Kolben ein Führungsraum für ein Halteelement zur Verschiebung der Läufervorrichtung der mindestens einen Kolbeneinrichtung gebildet. Über die Kolbeneinrichtung wird dieses Halteelement verschoben und damit die Läufervorrichtung verschoben. Das Halteelement kann dabei zwischen den beiden Kolben angeordnet sein. Bei dieser Ausführungsform läßt sich eine große Länge der Läufervorrichtung realisieren. Es kann auch an dem zweiten Kolben angeordnet sein oder an diesem gebildet sein.

Beispielsweise erstreckt sich die Läufervorrichtung in einer Richtung weg und in der Gegenrichtung weg vom Halteelement, um so eine große Länge für die Läufervorrichtung zu erreichen. Der Verschiebungsraum erstreckt sich dann in beiden Richtungen vom Halteelement weg.

Bei einer weiteren Ausführungsform sind zwei Kolbeneinrichtungen mit im wesentlichen zusammenfallenden Längsachsen gegenüberliegend angeordnet. Durch eine entsprechende Schaltung von zwei Kolbeneinrichtungen ist es möglich, über eine gemeinsame Versorgung und/oder Abführung die zwei Kolbeneinrichtungen zu betreiben. Die Versorgung bezieht sich dabei insbesondere auf Frischluft und/oder Medium (wie beispielsweise Brennstoff) und/oder elektrische Energie und/oder Kühlmedium. Die Abführung bezieht sich insbesondere auf Abgas.

Es kann dabei vorgesehen sein, daß die ersten Kolben der Kolbeneinrichtung, welche den Expansionsraum begrenzen, einander zuweisen. Über eine zentrale Versorgungseinrichtung, welche zwischen den ersten Kolben angeordnet ist, läßt sich dann beiden Brennräumen Frischluft und beispielsweise Brennstoff zuführen und von beiden Expansionsräumen Abgas abführen. Bei dieser Ausführungsform sind in einem Gehäuse zwei Kolbeneinrichtungen angeordnet, wobei die Zylinderköpfe einander zugewandt sind.

Es kann alternativ auch vorgesehen sein, daß die zweiten Kolben der Kolbeneinrichtung, welche Nicht-Expansionsräume begrenzen, einander zuweisen. Dadurch lassen sich die einander zuweisenden Rückfederräume gemeinsam mit komprimierbarem Medium versorgen. Der mittlere Bereich zwischen den zweiten Kolben wird dabei durch das Abgas nicht so stark aufgeheizt.

Es kann auch vorgesehen sein, daß eine Mehrzahl von Kolbeneinrichtung-Paaren nebeneinander angeordnet sind, um so ein Gesamtsystem aus einer Mehrzahl von Freikolbenvorrichtungen zu bilden, wobei insbesondere jedes Kolbeneinrichtungs-Paar in einem gemeinsamen Gehäuse angeordnet ist.

Vorteilhafterweise ist dann zwischen den Kolbeneinrichtungen eine Versorgungseinrichtung und/oder Abführungsvorrichtung angeordnet, über die sich die Mehrzahl an Kolbeneinrichtungen, welche gegenüberliegend angeordnet sind, und welche eventuell noch nebeneinander geschaltet sind, gemeinsam mit Frischluft, Medium wie Brennstoff und Kühlmedium versorgen lassen und über die Abgas abführbar ist. Es können dann auch entsprechende elektrische Anschlüsse für die individuellen Freikolbenvorrichtungen bereitgestellt werden.

Falls Nicht-Expansionsräume einander zuweisen, kann eine Versorgungseinrichtung für die entsprechenden Rückfederräume vorgesehen werden, um diese gemeinsam zu versorgen.

Es kann vorgesehen sein, daß ein Expansionsraum als Brennraum ausgebildet ist. In einem solchen Brennraum expandieren dann Brenngase. Die Brenngase selber wiederum können in dem Brennraum entstehen, indem dort Verbrennungsvorgänge stattfinden, oder können extern erzeugt werden und dann in den Brennraum eingekoppelt werden.

Es ist auch möglich, daß in dem Expansionsraum sich ein Wärmeträgermedium wie Dampf entspannt.

Dieses Wärmeträgermedium wird vorzugsweise außerhalb des Expansionsraums erzeugt bzw. es wird dem Wärmeträgermedium außerhalb des Expansionsraums Energie zugeführt. Beispielsweise wird Heißdampf in einen Expansionsraum eingekoppelt; der Dampf kann sich dort entspannen und eine Linearbewegung der Kolbeneinrichtung bewirken. Daraus wiederum läßt sich Strom gewinnen. Die Wärmeerzeugung und Druckerhöhung findet dabei außerhalb des Expansionsraums statt. Zur Erzeugung des Wärmeträgermediums bzw. zur Erhitzung des Wärmeträgermediums können verschiedene Verfahren eingesetzt werden; beispielsweise kann eine Erhitzung über konzentrierte Solarstrahlung erfolgen, wobei die Solarstrahlung über Solarkollektoren konzentriert wird. Es kann auch eine Erhitzung bzw. Wärmeübertragung über die Verbrennung fester, flüssiger oder gasförmiger Brennstoffe stattfinden. Das erhitzte Wärmeträgermedium kann in einem Druckkessel zwischengespeichert werden. Erfindungsgemäß läßt sich dadurch eine Freikolben-Dampfmaschine ausbilden, welche im Vergleich zu klassischen Dampfmaschinen einen höheren elektrischen Wirkungsgrad aufweist. Beim Einsatz von beispielsweise Dampf als in dem Expansionsraum expandierendes Medium sind Schmierungsprobleme für die sich bewegende Kolbeneinrichtung verringert, da sich insbesondere eine Wasserschmierung der Kolbeneinrichtung verwenden läßt.

Günstig ist es, wenn eine Rückkühlungseinrichtung von aus dem Expansionsraum abgeführten Medium vorgesehen ist. Dadurch läßt sich ein Kreislauf für das Wärmeträgermedium bezüglich der Zuführung zu der Freikolbenvorrichtung und der Abführung von der Freikolbenvorrichtung realisieren.

Die nachfolgende Beschreibung bevorzugter Ausführungsformen dient im Zusammenhang mit der Zeichnung der näheren Erläuterung der Erfindung.

Es zeigen:
- Figur 1: ein erstes Ausführungsbeispiel einer erfindungsgemäßen Freikolbenvorrichtung mit elektrischem Lineartrieb in schematischer Darstellung in Schnittansicht;
- Figur 2: ein zweites Ausführungsbeispiel einer erfindungsgemäßen Freikolbenvorrichtung mit elektrischem Lineartrieb in schematischer Darstellung in Schnittansicht;
- Figur 3: ein drittes Ausführungsbeispiel einer erfindungsgemäßen Freikolbenvorrichtung mit elektrischem Lineartrieb in schematischer Darstellung in Schnittansicht;
- Figur 4: ein viertes Ausführungsbeispiel einer erfindungsgemäßen Freikolbenvorrichtung mit elektrischem Lineartrieb in schematischer Darstellung in Schnittansicht;
- Figur 5: ein fünftes Ausführungsbeispiel einer erfindungsgemäßen Freikolbenvorrichtung mit elektrischem Lineartrieb in schematischer Darstellung in Schnittansicht;
- Figur 6: ein sechstes Ausführungsbeispiel einer erfindungsgemäßen Freikolbenvorrichtung mit elektrischem Lineartrieb in schematischer Darstellung in Schnittansicht;
- Figur 7: ein siebtes Ausführungsbeispiel einer erfindungsgemäßen Freikolbenvorrichtung mit elektrischem Lineartrieb in schematischer Darstellung in Schnittansicht;
- Figur 8: ein weiteres Ausführungsbeispiel einer Freikolbenvorrichtung mit elektrischen Lineartrieb, und
- Figur 9: ein weiteres Ausführungsbeispiel einer erfindungsgemäßen Vorrichtung, welche als Freikolben-Dampfmaschine ausgebildet ist.

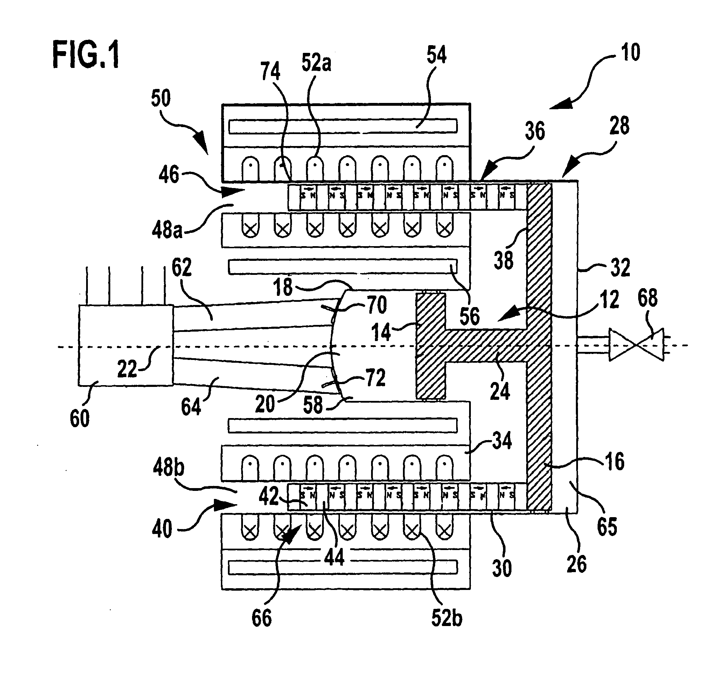

Ein erstes Ausführungsbeispiel einer erfindungsgemäßen Freikolbenvorrichtung mit elektrischen Lineartrieb, welche in Figur 1 als Ganzes mit 10 bezeichnet ist, umfaßt eine Kolbeneinrichtung 12 mit einem ersten Kolben 14 und einem zweiten Kolben 16. Der erste Kolben 14 ist in einer Kolbenaufnahme 18 (Zylinder) linearverschieblich. Die Kolbenaufnahme 18 bildet dabei einen ersten Verschiebungsraum 20, in dem eben dieser erste Kolben 14 der Kolbeneinrichtung 12 beweglich ist.

Der erste Verschiebungsraum 20 ist insbesondere rotationssymmetrisch um eine Achse 22 ausgebildet und hat dadurch eine zylindrische Gestalt.

Der zweite Kolben 16 ist mit dem ersten Kolben 14 über eine Kolbenstange 24 fest verbunden. Der zweite Kolben 16 ist in einem dritten Verschiebungsraum 26 beweglich, welcher axial (bezogen auf die Achse 22) auf den ersten Verschiebungsraum 20 folgt, aber mit diesem nicht überlappt. Der dritte Verschiebungsraum 26 ist in einem Gehäuse 28 zwischen Gehäusewänden 30 gebildet und weist eine im wesentlichen zylindrische Gestalt auf und liegt dabei koaxial zur Achse 22. Sein Durchmesser ist größer als der des ersten Verschiebungsraum 20.

Die Einheit von erstem Verschiebungsraum 20 und drittem Verschiebungsraum 26 hat annähernd die Gestalt eine großen T.

Das Gehäuse 28 weist dem zweiten Kolben 16 zugewandt einen ersten Gehäuseboden 32 auf, welcher den dritten Verschiebungsraum 26 axial zum einen Ende hin begrenzt. Zu dem anderen Ende hin ist der dritte Verschiebungsraum 26 durch einen zweiten Gehäuseboden 34 begrenzt, wobei die Kolbenaufnahme 18 für den ersten Kolben 14 im Bereich des zweiten Gehäusebodens 34 sitzt. Dieser ist ringförmig ausgebildet, damit eben der erste Verschiebungsraum 20 bildbar ist.

Der dritte Verschiebungsraum 26 ist durch den Raum zwischen dem ersten Gehäuseboden 32 und dem zweiten Gehäuseboden 34 abzüglich des Volumens des zweiten Kolbens 16, wenn dieser an dem zweiten Gehäuseboden 34 anliegt, gebildet.

Der zweite Kolben 16 ist als Halteelement für eine als Ganzes mit 36 bezeichnete Läufervorrichtung ausgebildet. Diese sitzt an einer dem ersten Kolben 14 zugewandten Innenfläche dieses zweiten Kolbens 16, so daß diese Innenfläche ein Halteelement 38 ausbildet.

Bei dem in Figur 1 gezeigten Ausführungsbeispiel umfaßt die Läufervorrichtung 36 eine Mehrzahl von beabstandeten Läuferreihen, welche jeweils aus einer Mehrzahl von Magnetelementen 42 mit dazwischen angeordneten Flußleitelementen 44 gebildet sind. Diese sind beispielsweise auf einer Stange (in der Figur nicht gezeigt) parallel zu der Achse 22 angeordnet, wobei diese Stange an dem zweiten Kolben 16 fixiert ist. Die Läuferreihen 40 sitzen dabei an dem Halteelement 38 im Bereich des Außenumfangs des zweiten Kolbens 16 und erstrecken sich von diesem weg in Richtung des ersten Kolbens 14 parallel zur Achse 22.

Bei den Magnetelementen 42 kann es sich um Permanentmagnetelemente handeln, die beispielsweise scheibenförmig rotationssymmetrisch ausgebildet sind. Es kann sich dabei auch um Elektromagnetelemente handeln, die entsprechend konzentrisch angeordnete Windungen umfassen. Es muß dann eine entsprechende Vorrichtung vorgesehen werden, um zu diesen Elektromagneten Energie übertragen zu können. Dies kann beispielsweise induktiv erfolgen und über Schleifringe.

Ein Flußleitelement 44 ist ebenfalls scheibenförmig hergestellt und aus einem Material hoher magnetischer Leitfähigkeit hergestellt. Verwendbar sind beispielsweise Eisen oder magnetisch leitfähige Pulververbundwerkstoffe.

Die Magnetelemente 42 sind so ausgebildet und insbesondere so magnetisiert, daß in einem Flußleitelement 44 die Feldlinien der benachbarten Magnetelemente 42 konzentriert werden, um somit die Leistungsdichte des Systems zu erhöhen. Insbesondere sind die Magnetelemente 42 derart parallel angeordnet, daß gleiche Pole einander zuweisen.

Die Läufervorrichtung 36 ist mit der Kolbeneinrichtung 12 fest verbunden, so daß bei Bewegung der Kolbeneinrichtung 12 die Läufervorrichtung 36 mitbewegt wird. Die Läufervorrichtung 36 ist dabei in einem zweiten Verschiebungsraum 46 beweglich, wobei dieser zweite Verschiebungsraum 46 getrennt von dem ersten Verschiebungsraum 20 ist, in dem der erste Kolben 14 beweglich ist. Ein Querabstand bezogen auf die Achse 22 dieses zweiten Verschiebungsraums 46 ist größer als der Radius des ersten Verschiebungsraums 20 in dieser Querrichtung.

Bei dem Ausführungsbeispiel gemäß Figur 1, bei dem eine Mehrzahl von Läuferreihen 40 vorgesehen sind, ist der zweite Verschiebungsraum 46 in eine Mehrzahl von Teilräumen 48a, 48b unterteilt, wobei die jeweiligen Läuferreihen 40 in den zugeordneten Teilräumen 48a, 48b usw. verschieblich sind. Beispielsweise weisen die Teilräume 48a, 48b einen runden Querschnitt auf und haben eine zylindrische Gestalt.

Der zweite Verschiebungsraum 46 überlappt teilweise mit dem dritten Verschiebungsraum 26, da die Läuferreihen 40 in den Bereich zwischen den beiden Gehäuseböden 32 und 34 eintauchen, wenn der zweite Kolben 16 von dem zweiten Gehäuseboden 34 weg verschoben wird.

Zur Bildung eines Lineartriebs ist eine als Ganzes mit 50 bezeichnete Statorvorrichtung vorgesehen. Diese umfaßt eine Mehrzahl von Spulen 52a, 52b, welche jeweils um die Teilräume 48a, 48b gewickelt sind. Die Teilräume 48a, 48b umgeben teilweise (jenseits des zweiten Gehäusebodens 34) den ersten Verschiebungsraum 20. Dadurch sind die Spulen 52a, 52b auch teilweise dem ersten Verschiebungsraum 20 zugewandt angeordnet.

Bei dem gezeigten Ausführungsbeispiel ist dabei eine Läuferreihe 40 bezogen auf die Achse 22 länger als der erste Verschiebungsraum 20.

Zur Kühlung der Statorvorrichtung 50 sind jeweilige Kühlungen 54, 56 mit Kühlkanälen vorgesehen, wobei die Kühlung 54 an der Statorvorrichtung 50 nach außen weisend liegt und die Kühlung 56 zwischen der Statorvorrichtung 50 und dem ersten Verschiebungsraum 20 liegt. Durch die Kühlung 56 läßt sich damit gleichzeitig auch ein Brennraum kühlen.

Die Läuferreihen 40 der Läufervorrichtung 36 und damit auch die Spulen 52a, 52b der Statorvorrichtung 50 sind symmetrisch bezogen auf die Achse 22 angeordnet.

In der Kolbenaufnahme 18 ist begrenzt durch den ersten Kolben 14 als Expansionsraum ein Brennraum 58 gebildet, in welchem Brenngase expandierbar sind, um die Kolbeneinrichtung 12 über den ersten Kolben 14 anzutreiben.

Die Abmessungen des Brennraums 58 sind dabei durch den Kolbenhub der Kolbeneinrichtung 12 bestimmt; insbesondere sind Volumen und Oberfläche durch den Umkehrpunkt der Kolbenbewegung des ersten Kolbens 14 bestimmt.

Dem Brennraum 58 ist ein Lader 60 zugeordnet. Über eine Zuführungsleitung 62, welche von dem Lader 60 in den Brennraum 58 führt, läßt sich Frischluft in diesen einkoppeln. Über eine Abführungsleitung 64 zwischen dem Brennraum 58 und dem Lader 60 läßt sich Abgas aus dem Brennraum 58 abführen.

Durch den zweiten Kolben 16 ist ein Nicht-Brennraum (Nicht-Expansionsraum) 65 begrenzt. Dieser ist als Rückfederraum ausgebildet, in dem ein elastisches Element oder ein kompressibles Medium aufgenommen ist.

Beispielsweise kann in dem Rückfederraum 65 eine Kompressionsfeder angeordnet sein (in der Zeichnung nicht gezeigt), welche die Energie zumindest teilweise aufnimmt, die während eines Verbrennungs-Arbeitstaktes nicht von dem Lineartrieb, welcher als Ganzes mit 66 bezeichnet wird und im wesentlichen durch die Kombination von Läufervorrichtung 36 und Statorvorrichtung 50 gebildet ist, ausgekoppelt wurde. Diese gespeicherte Energie kann zum Verdichten des Brennstoff-Luftgemisches beim 2-Takt-Betrieb oder zum Ausstoßen der Abgase beim 4-Takt-Betrieb verwendet werden.

Insbesondere kann es vorgesehen sein, daß in dem Rückfederraum 65 ein kompressibles Fluid und insbesondere Gas wie Luft aufgenommen ist, welches eben die Energie aufnimmt und wieder abgibt. Dazu sind ein oder mehrere Ventile 68 vorgesehen, über die der Druck in dem Rückfederraum 65 steuerbar und/oder regelbar ist.

Die erfindungsgemäße Freikolbenvorrichtung mit Lineartrieb 66 funktioniert wie folgt:

Über den Lineartrieb 66 werden durch entsprechende Strombeaufschlagung bestimmte Umkehrpunkte (UT und OT) der Kolbeneinrichtung 12 eingestellt, um somit das Volumen und die Oberfläche des Brennraums 58 festzulegen.

Weiterhin wird die Geschwindigkeit der Kolbeneinrichtung 12 festgelegt und insgesamt die Verdichtung. Diese Einstellung erfolgt in Abhängigkeit von der Last (Teillast oder Volllast), von dem Brennstoff (Benzin, Erdgas Wasserstoff, Diesel, Pflanzenöl usw.) und eventuellen weiteren externen Parametern.

Es kann vorgesehen sein, daß für den Start der Vorrichtung eine elektrische Vorheizung erfolgt und auch das Kühlwasser insbesondere der Kühlung 56 vorgeheizt wird. Durch den Lineartrieb 66 sind die Umkehrpunkte der Bewegung der Kolbeneinrichtung 12 örtlich und zeitlich genau vorgebbar, und somit ist im Teillastbetrieb für die Luftzuführung auch keine Drosselklappe notwendig, die sonst für Drosselverluste verantwortlich ist.

Über ein Ventil 70 für die Zuführungsleitung 62 in den Brennraum 58 und ein Ventil 72 für die Abführungsleitung 62 von dem Brennraum 58 läßt sich das Ansaugen von Luft und das Abführen der Abgase gezielt steuern. Dadurch läßt sich die Effizienz des Gesamtsystems verbessern und die Abgasqualität verbessern; durch genaue Einstellung der Steuerzeiten über Zeitpunkte und der Dauer hinsichtlich des Gaswechsels (durch Strömung durch die Ventile 70, 72) kann eine genaue Anpassung zwischen den einzelnen zeitkritischen Vorgängen stattfinden. Da auch die Geschwindigkeit der Kolbeneinrichtung 12 steuerbar bzw. regelbar ist, und zwar auch während des Expansionsvorgangs, ist die Entstehung von Abgasen beeinflußbar.

Während der Bewegung der Kolbeneinrichtung 12 wird aufgrund der Relativbewegung zwischen der Läufervorrichtung 36 und der Statorvorrichtung 50 in letzterer eine Spannung induziert, so daß elektrische Energie generiert wird, das heißt mechanische Energie wird teilweise in elektrische Energie umgewandelt, wobei wiederum die mechanische Energie aus einer teilweisen Umwandlung in chemische Energie aufgrund der Verbrennung in dem Brennraum 58 herrührt.

Durch den Rückfederraum 65 kann Energie aufgenommen werden, die während des Verbrennungs-Arbeitstaktes nicht vom Lineartrieb 66 ausgekoppelt wird.

Weitere Details bezüglich der grundsätzlichen Funktionsweise dieses Lineartriebs sind in der nicht-vorveröffentlichten deutschen Patentanmeldung Nr. 102 19 549.8 des gleichen Anmelders beschrieben, auf die hiermit ausdrücklich Bezug genommen wird.

Erfindungsgemäß ist es vorgesehen, daß der erste Verschiebungsraum 20 und der zweite Verschiebungsraum 46 getrennte Räume sind und damit entkoppelt sind. Dadurch ist zum einen eine thermische Entkopplung erreicht, da die Läuferreihen 40 in einem Abstand zu dem Brennraum 58 angeordnet sind. Da insbesondere Permanentmagnete sehr kritisch auf hohe Temperaturen reagieren, ist damit das magnetische Verhalten der Läufervorrichtung 36 stabilisiert, insbesondere aufgrund der Anordnung der Kühlung 56 zwischen dem ersten Verschiebungsraum 20 und dem zweiten Verschiebungsraum 46.

Weiterhin läßt sich der Lineartrieb optimieren: Die Leistungsdichte des Lineartriebs 66 läßt sich erhöhen, da diese im wesentlichen von einer Größe (Fläche)eines Luftspaltes 74 zwischen den Läuferreihen 40 und den Spulen 52a, 52b bestimmt ist. Je größer die Luftspaltoberfläche des Luftspalts 74, desto größer ist bei vorgegebenen Magnetelementen 42 die magnetische Leistungsdichte des Lineartriebs 66.

Da die Verbrennung selber ein Volumenprozess ist, sind die Verbrennungseigenschaften und damit der Antrieb des ersten Kolbens 14 aufgrund expandierender Gase im wesentlichen durch das Volumen des Brennraums 58 bestimmt. Da erfindungsgemäß der erste Verschiebungsraum 20 und der zweite Verschiebungsraum 46 entkoppelt sind, läßt sich damit die gesamte Vorrichtung bezüglich der Verbrennungseigenschaften und bezüglich der elektromagnetischen Eigenschaften optimieren. Dadurch ist es erreichbar, daß die Freikolbenvorrichtung 10 bei gleicher oder höherer Leistungsdichte (bei gleicher oder höherer Luftspaltoberfläche) bezogen auf die Achse 22 kürzer gebaut werden kann. Die Länge der Freikolbenvorrichtung 10 in Richtung der Achse 22 ist im wesentlichen durch die Länge der Läufervorrichtung 36 in Richtung dieser Achse bestimmt.

Die Abmessungen der Freikolbenvorrichtung 10 können so an äußere Gegebenheiten (Länge, Dicke, erforderliche Leistung) angepaßt werden.

Dadurch, daß die Statorvorrichtung 50 eine Mehrzahl von Spulen 52a, 52b und eine Mehrzahl von Läuferreihen 40 umfaßt, erhält man eine höhere Leistungsdichte; sind beispielsweise zwei Spulen 52a, 52b und zwei Läuferreihen 40 vorgesehen, dann verdoppelt sich die magnetische Leistungsdichte.

Weiterhin ist erfindungsgemäß ein hohes Luftvolumen für den Rückfederraum 65 bereitgestellt. Dieser kann dann auch für Einspeisung von Energie für den Verdichtungsvorgang verwendet werden. Mit Erhöhung des Volumens steigt auch der Wirkungsgrad der kurzzeitigen Energieeinspeicherung, da das Druckniveau entsprechend niedriger liegt.

Durch den topfartigen Aufbau mit den Verschiebungsräumen 20, 46 und 26 läßt sich somit eine hohe Leistungsdichte bei optimierten Wirkungsgrad ohne Vergrößerung oder sogar bei Verkleinerung der Längsabmessungen der Freikolbenvorrichtung erzielen.

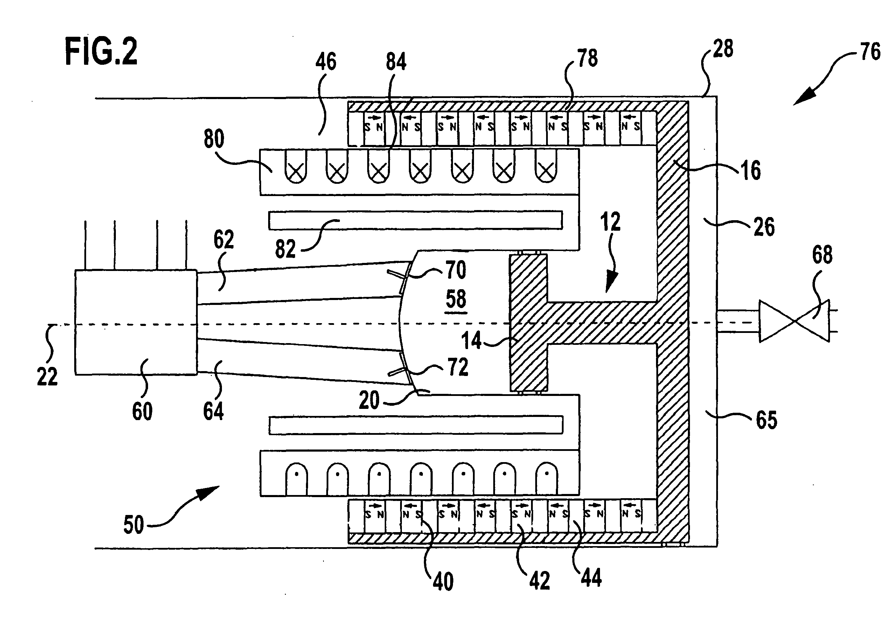

Bei einem zweiten Ausführungsbeispiel einer erfindungsgemäßen Freikolbenvorrichtung, welche in Figur 2 als Ganzes mit 76 bezeichnet ist, wobei grundsätzlich gleiche Bauteile wie bei dem Ausführungsbeispiel 10 mit gleichen Bezugszeichen bezeichnet werden, ist an dem zweiten Kolben 16 im Bereich seines Außenumfangs jeweils pro Läuferreihe 40 ein Leistenelement 78 angeordnet, welche in Richtung des ersten Kolbens 14 weist und in der Richtung 22 über diesen hinausragt. Das Leistenelement 78 ist parallel zur Achse 22. Das Leistenelement 78 hält dabei die Läuferreihe 40 und ist beispielsweise rohrförmig ausgebildet.

Die Statorvorrichtung 50 umfaßt jetzt nicht, wie bei dem Ausführungsbeispiel 10, Spulen 52a, 52b, welche jeweils um die Verschiebungsräume 46 gewickelt sind, sondern es ist eine Spule 80 um den ersten Verschiebungsraum 20 angeordnet, wobei eine zentrale Achse dieser Spule 80 mit der Achse 22 zusammenfällt. Die elektrische Energieauskopplung und -einkopplung des Lineartriebs 66 erfolgt dann nur über diese Spule 80 und nicht wie bei dem ersten Ausführungsbeispiel über mehrere Spulen 52, 52b.

Zwischen der Spule 80 und dem ersten Verschiebungsraum 20 ist eine Kühlung 82 angeordnet, über die sich sowohl der Brennraum 58 als auch die Spule 80 kühlen läßt. Außerdem sorgt diese Kühlung 82 für eine verbesserte thermische Entkopplung zwischen den Läuferreihen 40 und dem Brennraum 58.

Der Luftspalt 84, dessen Größe die Leistungsdichte des Lineartriebs 66 bestimmt, ist jetzt von dem Leistenelement 78 abgewandt zwischen den jeweiligen Läuferreihen 40 und der Spule 80 gebildet.

Wie bei dem Ausführungsbeispiel 10 handelt es sich bei der Läufervorrichtung 40 um einen Außenläufer, welcher einen Querabstand bezogen auf die Achse 22 zum ersten Kolben 14 aufweist, der größer ist als ein Kolbenradius in dieser Richtung.

Durch das,Halten der Läuferreihe 40 an der Leiste 78 als Halteelement ergibt sich ein mechanisch sicherer Aufbau, da eben die Magnetelemente 42 sicher fixierbar sind. Der Luftspalt 84 ist nach innen gerichtet, so daß sich auch hieraus ein selbstsichernder Halt der Läuferreihe an der Kolbeneinrichtung 12 ergibt.

Das Einlegen der Spule 80 und insbesondere Einlegen von Wicklungen läßt sich auf einfache Weise realisieren.

Durch eine gemeinsame Kühlung 82 und insbesondere durch einen oder mehrere gemeinsame Kühlkanäle lassen sich sowohl die Statorvorrichtung 50 als auch der Brennraum 58 gemeinsam kühlen.

Ansonsten funktioniert die Freikolbenvorrichtung 76 wie oben anhand des ersten Ausführungsbeispiels beschrieben.

Es kann auch vorgesehen sein, daß der zweite Verschiebungsraum 46 ringförmig ausgestaltet ist, wobei der Verschiebungsraum 46 dann den ersten Verschiebungsraum 20 umgibt. Beispielsweise kann es sich dann bei den Magnetelementen 42 um Ringelemente handeln, die entsprechend auch den ersten Verschiebungsraum 20 umgeben. Es kann aber auch vorgesehen sein, daß der zweite Verschiebungsraum 46 wie oben beschrieben in Teilräume unterteilt ist.

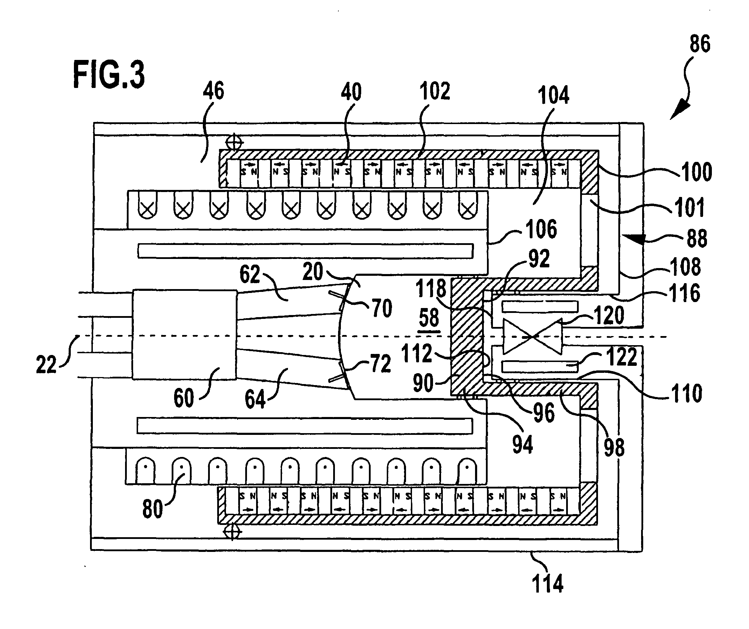

Bei einem dritten Ausführungsbeispiel, welches in Figur 3 als Ganzes mit 86 bezeichnet ist, umfaßt eine Kolbeneinrichtung 88 einen ersten Kolben 90 und einen zweiten Kolben 92, welche durch eine gemeinsame Kolbenplatte 94 gebildet sind. Der Verschiebungsraum des ersten Kolbens 90 entspricht demjenigen, wie er bereits im Zusammenhang mit den Ausführungsbeispielen 10 und 76 beschrieben wurde und erhält deshalb das gleiche Bezugszeichen 20.

Ein dritter Verschiebungsraum 96 des zweiten Kolbens 92 entspricht dabei im wesentlichen dem ersten Verschiebungsraum 20 abzüglich des Volumens der Kolbenplatte 94.

An dem zweiten Kolben 92 sind von diesem weg weisend und parallel zur Achse 22 ausgerichtet Wände 98 angeordnet, an welchen wiederum parallel beabstandet zum zweiten Kolben 92 ein Halteelement 100 sitzt, welches wiederum über ein Leistenelement 102 (beispielsweise in der Form eines Rohrs) Läuferreihen 40 hält. Diese sind so ausgebildet wie oben beschrieben und werden deshalb mit dem gleichen Bezugszeichen wie oben bezeichnet.

Der zweite Verschiebungsraum 46, in dem die Läufervorrichtung 36 beweglich ist, überlappt dabei mit einem Führungsraum 104, in welchem das Halteelement 100 geführt ist. Der Führungsraum 104 ist zwischen einem ersten Gehäuseboden 106 und einem zweiten Gehäuseboden 108 gebildet.

In dem Halteelement ist eine beispielsweise ringförmige durchgehende Öffnung 101 oder sind mehrere Öffnungen gebildet, welche beispielsweise zur Öleinspritzung dienen. Auch kann dadurch eine Luftpolsterbildung im Führungsraum 104 verhindert werden.

Zwischen den Wänden 98 ist durch diese eine Ausnehmung 110 gebildet, um einen Rückfederraum 112 zu bilden.

Dazu weist ein Gehäuse 114 der Freikolbenvorrichtung 86 im Bereich des zweiten Gehäusebodens 108 ein symmetrisch zur Achse 22 angeordnetes zylindrisches Element 116 auf, welches in der Art eines Stutzens ausgebildet ist, und dessen Querfläche 118 den Rückfederraum 112 zur anderen Seite hin In dem Stutzen 116 sitzt ein Ventil 120 zur Steuerung der Luftzuführung für den Rückfederraum 112. Ferner sitzt in dem Stutzen 116 eine Kühlung 122 für den Rückfederraum 112, der gekühlt werden muß, da der erste Kolben 90 den Brennraum 58 begrenzt und der zweite Kolben 92 in direktem thermischen Kontakt mit dem ersten Kolben 90 steht. Es lassen sich mit der Kühlung 122 insbesondere auch die Kolben 90 und 92 in der Art einer Innenkühlung kühlen, wobei die Kühlung über ein flüssiges oder gasförmiges Medium erfolgen kann.

Bei der Freikolbenvorrichtung 86 läßt sich bei großer Oberfläche für die elektromagnetische Kraftbildung, wie bereits anhand des zweiten Ausführungsbeispiels 76 beschrieben, die Länge weiter verkleinern bzw. es läßt sich eine größere Unabhängigkeit der Geometrieparameter Länge und Durchmesser erreichen. Weiterhin läßt sich eine Lagerung der Läufervorrichtung 40 in dem Außengehäuse 114 erreichen. Das Volumen des Rückfederraums 112 ist beliebig anpaßbar.

Ansonsten funktioniert die Freikolbenvorrichtung 86 wie bereits oben anhand des ersten Ausführungsbeispiels 10 und des zweiten Ausführungsbeispiels 76 beschrieben.

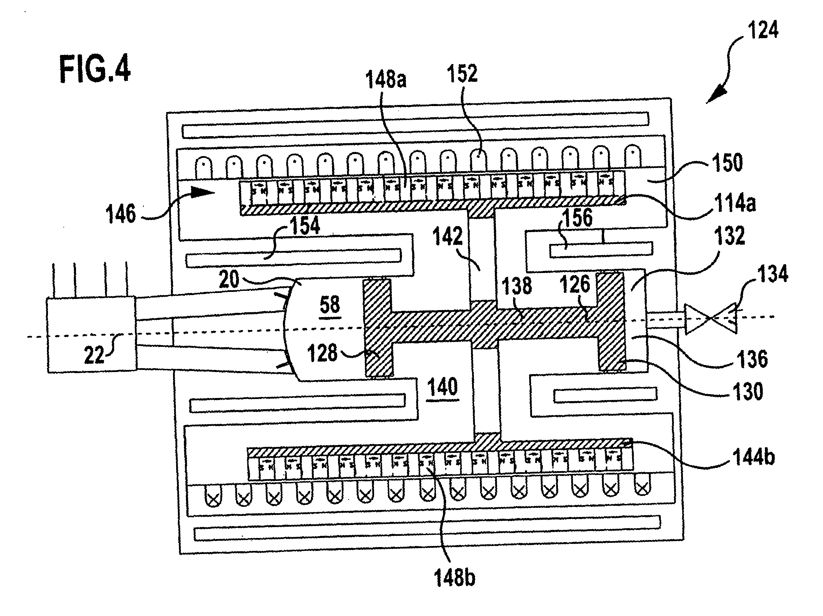

Bei einem vierten Ausführungsbeispiel, wie es in Figur 4 gezeigt und dort als Ganzes mit 124 bezeichnet ist, ist eine Kolbeneinrichtung 126 mit einem ersten Kolben 128 und einem zweiten Kolben 130 vorgesehen, wobei der erste Kolben den Brennraum 58 begrenzt und in dem Verschiebungsraum 20 verschieblich geführt ist.

Der zweite Kolben 130 begrenzt einen Rückfederraum 132, welcher über ein Steuerventil 134 steuerbar mit Luft versorgbar ist. Der zweite Kolben 130 ist in einem dritten Verschiebungsraum 136 verschieblich geführt.

Die beiden Verschiebungsräume 20 und 136 sind dabei im wesentlichen zylindrisch ausgestaltet mit gleicher Zylinderachse 22 und können den gleichen Durchmesser aufweisen.

Die beiden Kolben sind miteinander fest beispielsweise über eine Kolbenstange 138 verbunden. Zwischen den beiden Verschiebungsräumen 20 und 136 ist ein Führungsraum 140 für ein Halteelement 142 gebildet, welches an der Kolbenstange 138 zwischen den beiden Kolben 128 und 130 quer zu der Achse 22 orientiert sitzt und in seinem Umfangsbereich jeweils Leistenelemente 144a, 144b beispielsweise in der Form von Rohrstücken hält, welche wiederum eine Läufervorrichtung 146 mit Läuferreihen 148a, 148b hält. Die Läuferreihen 148a, 148b sind so ausgebildet wie bereits oben anhand der Läuferreihen 40 beschrieben. Die Läufervorrichtung 146 ist dabei beweglich in einem zweiten Verschiebungsraum 150, welcher einen Querabstand zu der Achse 22 aufweist, der größer ist als der Radius der Verschiebungsräume 20 und 136. Die Läuferreihen 148a, 148b, welche parallel zur Achse 22 angeordnet sind, erstrecken sich dabei von einem ersten Ende bis zu einem zweiten Ende, wobei das erste Ende bezogen auf die Achse 22 im Bereich des Endes des zweiten Kolbens 130 liegt und das andere Ende oberhalb des Endes des ersten Kolbens 128 liegt, wenn der Rückfederraum 132 eine minimale Höhe aufweist.

Der Führungsraum 140 ist so angepaßt, daß das Halteelement 142 zwischen zwei äußeren Stellungen führbar ist, welche den jeweiligen äußeren Stellungen des ersten Kolbens 128 und zweiten Kolbens 130 entsprechen (Brennraum 58 mit minimalem Volumen und maximalem Volumen; Rückfederraum 132 mit minimalem und maximalem Volumen). Die Länge des zweiten Verschiebungsraums 150 bezogen auf die Achse 22 ist größer als die Länge des dritten Verschiebungsraums 136, des Führungsraums 140 und des ersten Verschiebungsraums 20 in Kombination.

Dadurch läßt sich eine große Luftspaltoberfläche für die elektromagnetische Kraftbildung erreichen, da die Läuferreihen 148a, 148b mit relativ großer Länge ausbildbar sind. Insbesondere läßt sich die Systemlänge, das heißt die Länge der Freikolbenvorrichtung in Richtung der Achse 22 im wesentlichen voll ausnutzen und dadurch wiederum läßt sich eine große Unabhängigkeit zwischen den Geometrieparametern Länge und Durchmesser erreichen.

Eine Spule 152 ist dabei außerhalb des zweiten Verschiebungsraums 150 um diesen gewickelt. Kühlungen 154 und 156 sind jeweils für den Brennraum 58 und für den Rückfederraum 136 vorgesehen, wobei diese Kühlungen 154 und 156 zwischen den Verschiebungsräumen 20 und 136 und den Leisten 144a, 144b angeordnet sind, so daß auch für eine thermische Entkopplung bezüglich der Magnetelemente 40 gesorgt ist.

Ansonsten funktioniert die Freikolbenvorrichtung 124 wie oben beschrieben.

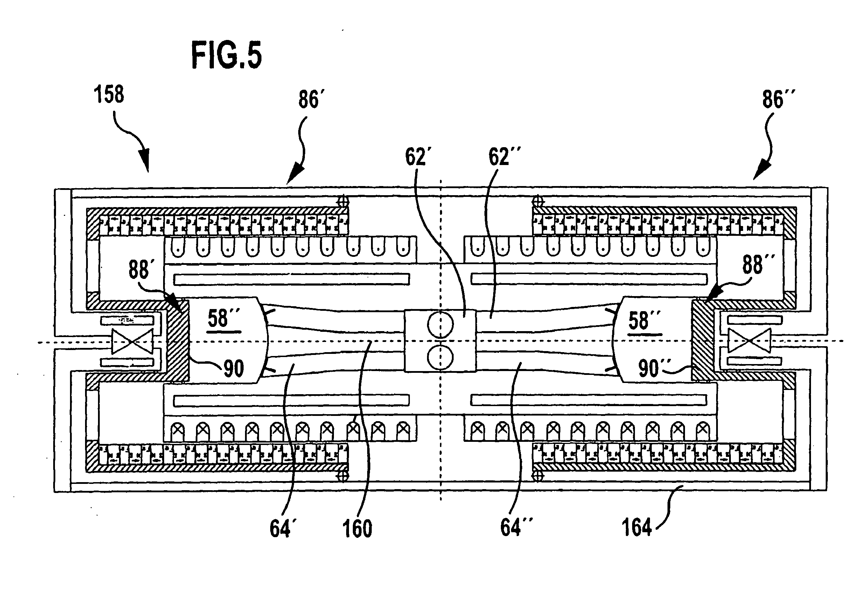

Ein fünftes Ausführungsbeispiel, welches in Figur 5 gezeigt und dort als Ganzes mit 158 bezeichnet ist, läßt sich herstellen, indem zwei Freikolbenvorrichtungen 86 gemäß drittem Ausführungsbeispiel miteinander mit gemeinsamem Gehäuse verknüpft werden. Die entsprechenden Freikolbenvorrichtungen mit ihren Bauteilen werden im folgenden mit ' und " bezeichnet. Es sind zwei Kolbeneinrichtungen 88' und 88" vorgesehen, welche längsverschieblich gegenüber einer gemeinsamen Symmetrieachse 160 sind.

Die ersten Kolben 90' und 90" der beiden Kolbeneinrichtungen 88' und 88" liegen dabei einander gegenüber, wobei ein gemeinsamer Lader 162 vorgesehen ist, über den eine Zuführungsleitung 62' und 62" jeweils zu den Brennräumen 58' und 58" führt. Abführungsleitungen 64' und 64" führen von diesen Verbrennungsräumen 58' und 58" zu dem Lader 162.

Es ergibt sich dann eine 2-Zylinder-Anordnung in einem Gehäuse 164, welches die einzelnen Verbrennungsvorrichtungen 86' und 86" mit entsprechenden Lineartrieben umfaßt. Über den Lader 162 ergibt sich eine einfache Versorgung des Gesamtsystems, das heißt der beiden Brennräume 58' und 58" mit Frischluft. Weiterhin läßt sich über eine gemeinsame Versorgungsvorrichtung und Abführungsvorrichtung Kühlwasser zuführen und abführen, Brennstoff zuführen, Abgas abführen und entsprechend können zentral elektrische Anschlüsse vorgesehen sein.

Bei entsprechender symmetrischer Steuerung läßt sich auch eine symmetrische Bewegung und insbesondere spiegelsymmetrische Bewegung der beiden Kolbeneinrichtungen 88' und 88" erreichen.

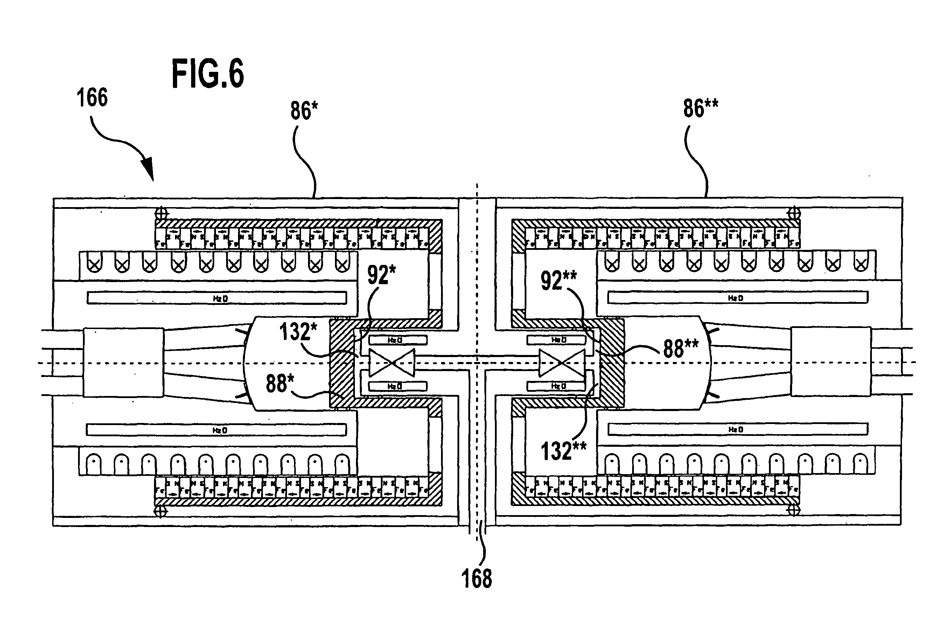

Bei einem sechsten Ausführungsbeispiel, welches in Figur 6 als Ganzes mit 166 bezeichnet ist, sind wiederum zwei Freikolbenvorrichtungen 86 gemäß dem dritten Ausführungsbeispiel in einem gemeinsamen Gehäuse gegenüberliegend angeordnet, wobei jetzt die beiden zweiten Kolben 92 gegenüberliegen (in Figur 6 mit 92* und 92** bezeichnet). Die Freikolbenvorrichtung 166 erhält man folglich durch Verknüpfung der Freikolbenvorrichtung 86. In Figur 6 werden die entsprechenden Vorrichtungen mit ihren Bauelementen mit einem * bzw. ** bezeichnet. Es sind dann wiederum entsprechenden Kolbeneinrichtungen 88* und 88** vorgesehen.

Weiterhin sind Rückfederräume 132* und 132** einander zugewandt. Diese werden über eine gemeinsame Versorgungsleitung 168 mit komprimierbarem Medium und insbesondere Luft versorgt.

Dies hat den Vorteil gegenüber dem Ausführungsbeispiel 158, daß das Abgas von den Verbrennungsräumen 58 nicht in dem mittleren Bereich zwischen den beiden Freikolbenvorrichtungen 86* und 86** abgeführt wird, sondern nach außen hin und somit das Abgas diesen mittleren Bereich nicht so stark aufheizen kann, als wenn es über diesen abgeführt werden würde.

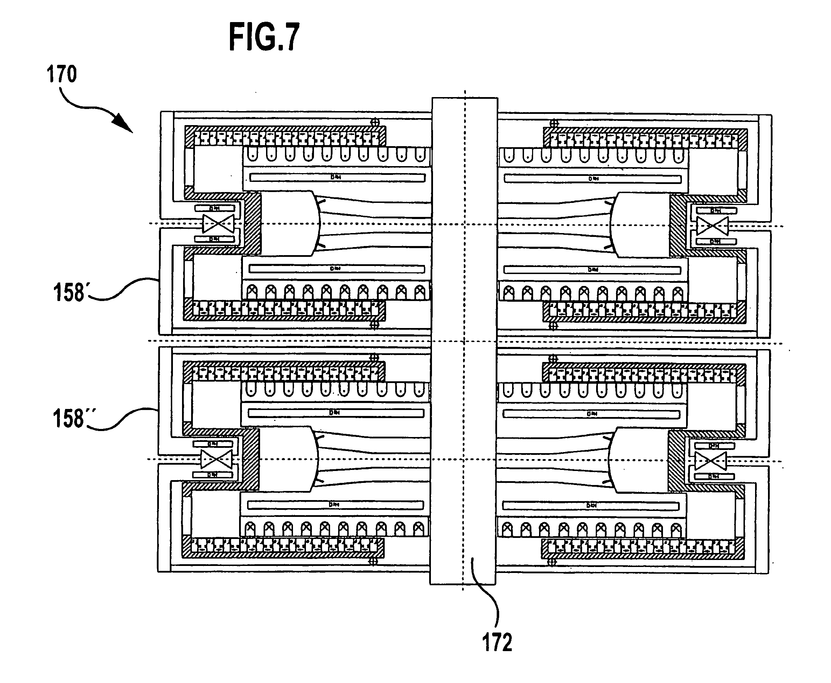

Bei einem siebten Ausführungsbeispiel, welches in Figur 7 als Ganzes mit 170 bezeichnet ist, erhält man ein Gesamtsystem an Freikolbenvorrichtungen, indem man Freikolbenvorrichtungen gemäß Figur 5 nebeneinander schaltet und eine gemeinsame Versorgungsvorrichtung/Abführungsvorrichtung 172 vorsieht, welche insbesondere mittig angeordnete Versorgungskanäle und Abführungskanäle aufweist, über die sich die einzelnen Freikolbenvorrichtungen 158' und 158" und damit wiederum 86' und 86" mit Frischluft versorgen lassen, mit Brennstoff versorgen lassen, mit Kühlwasser versorgen lassen und über die sich Abgas abführen läßt. Weiterhin können entsprechende elektrische Anschlüsse für die einzelnen Freikolbenvorrichtungen vorgesehen werden.

Ansonsten funktioniert die Freikolbenvorrichtung gemäß dem siebten Ausführungsbeispiel wie oben beschrieben.

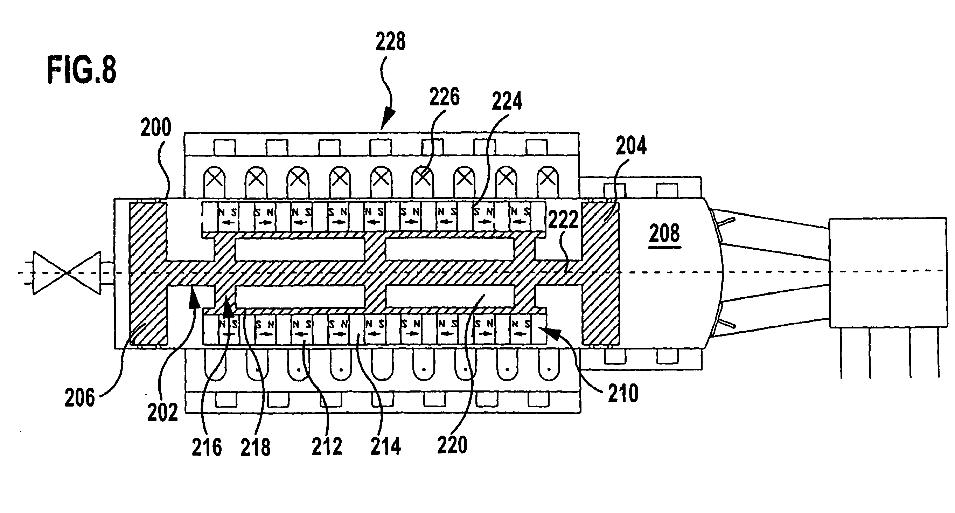

Bei einem weiteren Ausführungsbeispiel, welches in Figur 8 gezeigt ist, ist in einer Kolbenaufnahme 200 eine Kolbeneinrichtung 202 linearverschieblich geführt, wobei die Kolbeneinrichtung 202 einen ersten Kolben 204 und einen zweiten Kolben 206 umfaßt.

Der erste Kolben 204 begrenzt einen Brennraum 208, wobei expandierende Gase auf den ersten Kolben 204 wirken.

Zwischen dem ersten Kolben 204 und dem zweiten Kolben 206 sitzt eine Läufervorrichtung 210 an der Kolbeneinrichtung 202, welche beabstandete Magnetelemente 212 mit dazwischenliegenden Flußleitelementen 214 aufweist.

Die Kolbeneinrichtung weist eine Haltestruktur 216 zur Fixierung der Läufervorrichtung 210 an der Kolbeneinrichtung 202 auf. Diese Haltestruktur 216 weist ein Halteelement 218 für die Läufervorrichtung 210 auf wobei dieses Halteelement 218 die Läufervorrichtung 210 hält. Das Halteelement 218 ist beispielsweise zylindrisch ausgebildet.

Die Haltestruktur 216 weist Hohlräume 220 auf, welche zwischen dem Halteelement 218 und einer Kolbenstange 222 gebildet sind, welche die beiden Kolben 204 und 206 miteinander verbinden.

Durch die Hohlräume 220 ist eine Leichtbauweise für die Kolbeneinrichtung 202 realisiert, so daß das Massenträgheitsmoment der Kolbeneinrichtung 202 verringert ist.

Weiterhin läßt sich eine bessere thermische Entkopplung der Läufervorrichtung 210 von insbesondere dem ersten Kolben 204 erreichen, da die Wärmetransportwege in der Haltestruktur 216 minimiert sind.

Weiterhin umfaßt die Läufervorrichtung 210 Läuferreihen 224, so daß die Magnetanordnung in einer Querebene (axiale Ebene) nicht durchgehend ist.

Um die Kolbenaufnahme 200 ist eine Spule 226 als Statorvorrichtung angeordnet. Diese Spule 226 ist insbesondere übe reine Kühlungsvorrichtung 228 kühlbar.

Ansonsten funktioniert die Freikolbenvorrichtung gemäß Figur 8 wie oben beschrieben.

Oben wurden als Ausführungsbeispiele für erfindungsgemäße Freikolbenvorrichtungen Freikolben-Verbrennungsvorrichtungen beschrieben. Diese lassen sich insbesondere als Brennkraftmaschinen einsetzen.

Es ist auch möglich, über die erfindungsgemäße Lösung eine Freikolben-Dampfmaschine zu realisieren, wie untenstehend noch näher beschrieben wird.

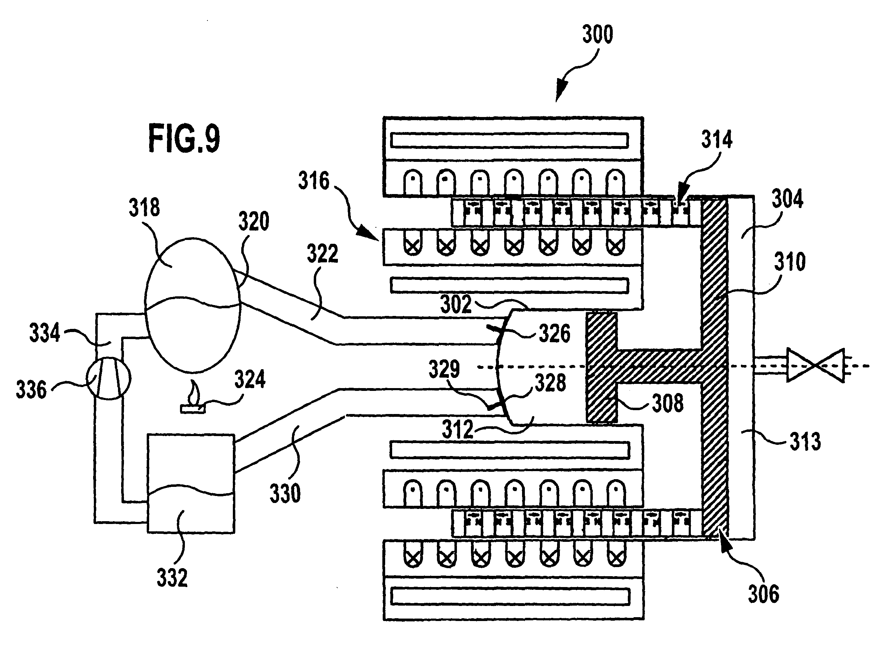

Bei einem sechsten Ausführungsbeispiel einer erfindungsgemäßen Freikolbenvorrichtung, welche in Figur 9 als Ganzes mit 300 bezeichnet ist, umfaßt eine Kolbenaufnahme 302 einen Innenraum 304, in welchem eine Kolbeneinrichtung 306 linear-beweglich angeordnet ist. Die Kolbeneinrichtung 306 umfaßt einen ersten Kolben 308 und einen mit diesem verbundenen gegenüberliegenden zweiten Kolben 310.

Der erste Kolben 308 begrenzt einen Expansionsraum 312, in dem sich ein Wärmeträgermedium wie Dampf entspannen kann, wobei über diese Expansion des Wärmeträgermediums eine Kraft auf den ersten Kolben 308 und damit auf die Kolbeneinrichtung 306 ausgeübt wird. Der zweite Kolben 310 begrenzt einen Rückfederraum 313, welcher in dem Innenraum 304 der Kolbenaufnahme 302 am anderen Ende bezogen auf den Expansionsraum 312 gebildet ist.

An der Kolbeneinrichtung 306 ist eine Läufervorrichtung 314 fixiert, welche sich mit der Kolbeneinrichtung 306 bewegt. Eine Statorvorrichtung 316 ist bezogen auf die Kolbenaufnahme 302 ortsfest fixiert.

Die Funktionsweise einer solchen Antriebsvorrichtung ist grundsätzlich gleich wie oben beschrieben.

Das Wärmeträgermedium, bei dem es sich insbesondere um Dampf handelt, wird außerhalb des Expansionsraums 312 erzeugt bzw. erhitzt. Dazu ist beispielsweise ein Druckkessel 318 vorgesehen, welcher über einen Ausgang 320 an den Expansionsraum 312 gekoppelt ist. Zwischen diesem Ausgang 320 und dem Expansionsraum 312 ist eine Leitung 322 für Wärmeträgermedium angeordnet.

Der Druckkessel 318 ist mittels einer Wärmequelle 324 beheizbar. Die Wärmequelle selber kann mittels Solarstrahlung oder mittels Brennstoffen beheizt sein.

Erhitztes Wärmeträgermedium wie beispielsweise Heißdampf wird von dem Druckkessel 318 in den Expansionsraum 312 eingekoppelt und kann sich dort entspannen. Dies führt zu einer Kolbenbewegung an der Kolbeneinrichtung 306, wodurch sich elektrische Energie erzeugen läßt. Zur Einkopplung des Wärmeträgermediums in den Expansionsraum ist an diesem ein entsprechendes Ventil 326 angeordnet, welches mechanisch oder elektrisch betätigbar ist. Dadurch läßt sich auf entsprechende Weise die Wärmeträgermediumzufuhr steuern bzw. regeln.

An einem Auslaß 328 des Expansionsraums 312 sitzt ein weiteres Ventil 329, über welches die Mediumabfuhr aus dem Expansionsraum 312 steuerbar bzw. regelbar ist, wobei diese Steuerung insbesondere gekoppelt an die Wärmeträgermediumzufuhr erfolgt.

Der Auslaß 328 ist über eine Leitung 330 mit einer Rückkühlungseinrichtung 332 verbunden, über die sich aus dem Expansionsraum 312 abgeführtes Medium abkühlen läßt. Das Medium, welches in die Rückkühlungseinrichtung 332 eintritt, steht unter einem geringeren Druck als das Medium, welches aus dem Druckkessel 318 aus- und in den Expansionsraum 312 zur Entspannung eintritt.

Von der Rückkühlungseinrichtung 332 läßt sich Medium wie Dampf über eine Leitung 334 in den Druckkessel 318 führen, um dort wiederum dem Medium Energie zuführen zu können, d. h. Wärmeträgermedium für den Expansionsraum 312 bereitstellen zu können.

In der Leitung 334 ist eine Pumpe 336 angeordnet, um das Medium in den Druckkessel 318 befördern zu können.

Der Druckkessel 318 ist vorzugsweise mit Dampf gefüllt.

Durch Expansion des unter Druck in den Expansionsraum 312 eingeführten Dampfes wird die Linearbewegung der Kolbeneinrichtung 306 bewirkt, welche wiederum die elektrische Energieerzeugung bewirkt. Die Kolbenbewegung und die Erzeugung der elektrischen Energie erfolgt auf die grundsätzlich gleiche Weise wie oben beschrieben.

Auch bei einer solchen Freikolben-Dampfmaschine kann eine Mehrzahl von Kolbeneinrichtungen und Expansionsräumen wie oben beschrieben vorgesehen sein.

Es ist auch möglich, bei einer Freikolben-Verbrennungsvorrichtung einem Brennraum Brenngase zuzuführen, welche extern erzeugt wurden und dann in den Brennraum eingekoppelt werden, welcher durch die entsprechende Kolbeneinrichtung begrenzt wird.

## Patentansprüche

1. Freikolbenvorrichtung mit elektrischem Lineartrieb (66), umfassend mindestens eine linear bewegliche Kolbeneinrichtung (12; 126), eine Läufervorrichtung (36; 146), welche mit der Kolbeneinrichtung (12; 126) verbunden ist, eine Statorvorrichtung (50; 152), wobei die mindestens eine Kolbeneinrichtung (12; 126) unter der Wirkung eines Mediums, welches in einem Expansionsraum expandiert, antreibbar ist, einen ersten Verschiebungsraum (20), in welchem ein Kolben (14; 128) der mindestens einen Kolbeneinrichtung (12; 126), auf den das Medium wirkt, beweglich ist, und einen zweiten Verschiebungsraum (46; 150), in welchem die zugeordnete Läufervorrichtung (36; 146) beweglich ist, wobei der erste Verschiebungsraum (20) und der zweite Verschiebungsraum (46; 150) getrennte Räume sind,
**dadurch gekennzeichnet , daß** die Kolbeneinrichtung (12; 126) an einem Ende mit einem ersten Kolben (14; 128) einen Expansionsraum (58) begrenzt und an einem gegenüberliegenden Ende mit einem zweiten Kolben (16; 130) einen Raum (65; 132), welcher kein Expansionsraum ist und als Rückfederraum für die Kolbeneinrichtung (12; 126) ausgebildet ist, begrenzt und daß ein dritter Verschiebungsraum (26; 136), in welchem sich der zweite Kolben (16; 130) bewegt, einen größeren Durchmesser aufweist als der erste Verschiebungsraum (20).

2. Freikolbenvorrichtung nach Anspruch 1, **dadurch gekennzeichnet, daß** die mindestens eine Kolbeneinrichtung (12; 126) und die Läufervorrichtung (36; 146) parallel geführt sind.

3. Freikolbenvorrichtung nach Anspruch 1 oder 2, **dadurch gekennzeichnet, daß** der zweite Verschiebungsraum (46; 150) zumindest teilweise den ersten Verschiebungsraum (20) umgibt.

4. Freikolbenvorrichtung nach einem der vorangehenden Ansprüche, **dadurch gekennzeichnet, daß** der erste Verschiebungsraum (20) einen kreisförmigen Querschnitt aufweist.

5. Freikolbenvorrichtung nach einem der vorangehenden Ansprüche, **dadurch gekennzeichnet, daß** der zweite Verschiebungsraum (46; 150) einen ringförmigen oder kreisförmigen Querschnitt aufweist.

6. Freikolbenvorrichtung nach einem der vorangehenden Ansprüche, - **dadurch gekennzeichnet, daß** eine Symmetrieachse (22) des ersten Verschiebungsraums (20) mit einer Symmetrieachse eines Expansionsraums (58) zusammenfällt.

7. Freikolbenvorrichtung nach einem der vorangehenden Ansprüche, **dadurch gekennzeichnet, daß** die Läufervorrichtung (36; 146), welche der mindestens einen Kolbeneinrichtung (12; 126) zugeordnet ist, einen Querabstand zu der Kolbeneinrichtung (12; 126) aufweist, welcher größer ist als die Querausdehnung des ersten Verschiebungsraums (20) in Richtung des Querabstands.

8. Freikolbenvorrichtung nach Anspruch 7, **dadurch gekennzeichnet, daß** die Läufervorrichtung (36; 146) als Außenläufer ausgebildet ist.

9. Freikolbenvorrichtung nach einem der vorangehenden Ansprüche, **dadurch gekennzeichnet, daß** die Läufervorrichtung (36; 146) symmetrisch bezüglich einer Achse (22) des ersten Verschiebungsraums (20) angeordnet ist.

10. Freikolbenvorrichtung nach einem der vorangehenden Ansprüche, **dadurch gekennzeichnet, daß** der zweite Verschiebungsraum (46; 150) eine Mehrzahl von Teilräumen (48a, 48b) umfaßt.

11. Freikolbenvorrichtung nach einem der vorangehenden Ansprüche, **dadurch gekennzeichnet, daß** die Läufervorrichtung (36; 146) eine Mehrzahl von Teilläufern (40; 148a, 148b) umfaßt, wobei jeder Teilläufer (40; 148a, 148b) in einem Teilraum (48a, 48b; 150) verschieblich geführt ist.

12. Freikolbenvorrichtung nach einem der vorangehenden Ansprüche, **dadurch gekennzeichnet, daß** die Statorvorrichtung (50; 80) an dem zweiten Verschiebungsraum (46) angeordnet ist.

13. Freikolbenvorrichtung nach einem der vorangehenden Ansprüche, **dadurch gekennzeichnet, daß** die Statorvorrichtung (50) um den zweiten Verschiebungsraum (46) oder um Teilräume (48a, 48b) des zweiten Verschiebungsraums (46) angeordnet ist.

14. Freikolbenvorrichtung nach einem der Ansprüche 1 bis 12, **dadurch gekennzeichnet, daß** die Statorvorrichtung (80) um den ersten Verschiebungsraum (20) angeordnet ist.

15. Freikolbenvorrichtung nach einem der vorangehenden Ansprüche, **dadurch gekennzeichnet, daß** zwischen der Statorvorrichtung (50; 80) und dem ersten Verschiebungsraum (20) eine Kühlung (56) angeordnet ist.

16. Freikolbenvorrichtung nach einem der vorangehenden Ansprüche, **dadurch gekennzeichnet, daß** um die Statorvorrichtung (50) eine Kühlung (54, 56) angeordnet ist.

17. Freikolbenvorrichtung nach einem der vorangehenden Ansprüche, **dadurch gekennzeichnet, daß** zwischen der Läufervorrichtung (36; 146) und der Statorvorrichtung (50; 152) ein Luftspalt (74) gebildet ist.

18. Freikolbenvorrichtung nach einem der vorangehenden Ansprüche, **dadurch gekennzeichnet, daß** die Läufervorrichtung (36; 146) eine oder mehrere Reihen (40; 148a, 148b) von hintereinander angeordneten Magnetelementen (42) umfaßt.

19. Freikolbenvorrichtung nach Anspruch 18, **dadurch gekennzeichnet, daß** eine Reihe (40) an einem Leistenelement (78) sitzt, welches einem der Statorvorrichtung (50) zugewandten Luftspalt (74) gegenüberliegend angeordnet ist.

20. Freikolbenvorrichtung nach Anspruch 18 oder 19, **dadurch gekennzeichnet, daß** zwischen benachbarten Magnetelementen (42) Flußleitelemente (44) angeordnet sind.

21. Freikolbenvorrichtung nach einem der vorangehenden Ansprüche, **dadurch gekennzeichnet, daß** der dritte Verschiebungsraum (26; 136), in welchem sich der zweite Kolben (16; 130) bewegt, einen kreisförmigen Querschnitt aufweist.

22. Freikolbenvorrichtung nach einem der vorangehenden Ansprüche, **dadurch gekennzeichnet, daß** zweiter Verschiebungsraum (46; 150) und dritter Verschiebungsraum (26; 136) überlappen.

23. Freikolbenvorrichtung nach einem der vorangehenden Ansprüche, **dadurch gekennzeichnet, daß** der zweite Kolben (16; 130) eine größere Oberfläche zu dem Nicht-Expansionsraum (65; 132) hin aufweist als der erste Kolben (14; 128) zu dem Expansionsraum (58) hin.

24. Freikolbenvorrichtung nach einem der vorangehenden Ansprüche, **dadurch gekennzeichnet, daß** die Läufervorrichtung (36) mit dem zweiten Kolben (16) verbunden ist.

25. Freikolbenvorrichtung nach einem der vorangehenden Ansprüche, **dadurch gekennzeichnet, daß** der erste Kolben (14) und der zweite Kolben (16) über eine Kolbenstange (24) verbunden sind.

26. Freikolbenvorrichtung nach einem der Ansprüche 1 bis 21, **dadurch gekennzeichnet, daß** der dritte Verschiebungsraum (136), in welchem sich der zweite Kolben (130) bewegt, nicht mit dem zweiten Verschiebungsraum (150) überlappend ist.

27. Freikolbenvorrichtung nach Anspruch 26, **dadurch gekennzeichnet, daß** der erste Kolben (90) und der zweite Kolben (92) durch eine gemeinsame Kolbenplatte (94) gebildet sind.

28. Freikolbenvorrichtung nach Anspruch 26 oder 27, **dadurch gekennzeichnet, daß** die Kolbeneinrichtung (88) im Bereich des zweiten Kolbens (92) zur Bildung des Nicht-Expansionsraums (112) eine Ausnehmung aufweist.

29. Freikolbenvorrichtung nach Anspruch 28, **dadurch gekennzeichnet, daß** die Ausnehmung (110) zwischen Seitenwänden (98) der Kolbeneinrichtung (88) gebildet ist, wobei die Läufervorrichtung (36) über die Seitenwände (98) an der Kolbeneinrichtung (88) gehalten ist.

30. Freikolbenvorrichtung nach einem der vorangehenden Ansprüche, **dadurch gekennzeichnet, daß** deren Längsabmessung durch die Läufervorrichtung (36; 126; 146) bestimmt ist.

31. Freikolbenvorrichtung nach einem der vorangehenden Ansprüche, **dadurch gekennzeichnet, daß** zwischen dem ersten Verschiebungsraum (20) und dem dritten Verschiebungsraum (136) ein Führungsraum (140) für ein Halteelement (142) zur Verbindung der Läufervorrichtung (146) mit der mindestens einen Kolbeneinrichtung (126) gebildet ist.

32. Freikolbenvorrichtung nach Anspruch 31, **dadurch gekennzeichnet, daß** sich die Läufervorrichtung in einer Richtung von dem Halteelement (142) wegerstreckt.

33. Freikolbenvorrichtung nach Anspruch 31, **dadurch gekennzeichnet, daß** die Läufervorrichtung (146) sich in einer Richtung weg und in der Gegenrichtung weg vom Halteelement (142) erstreckt.

34. Freikolbenvorrichtung nach einem der vorangehenden Ansprüche, **dadurch gekennzeichnet, daß** zwei Kolbeneinrichtungen (88', 88"; 88*, 88**) mit im wesentlichen zusammenfallender Längsachse (160) gegenüberliegend angeordnet sind.

35. Freikolbenvorrichtung nach Anspruch 34, **dadurch gekennzeichnet, daß** die ersten Kolben (90', 90"), welche Expansionsräume (58) begrenzen, einander zuweisen.

36. Freikolbenvorrichtung nach Anspruch 34, **dadurch gekennzeichnet, daß** die zweiten Kolben (132*, 132**), welche Nicht-Expansionsräume begrenzen, einander zuweisen.

37. Freikolbenvorrichtung nach einem der vorangehenden Ansprüche, **dadurch gekennzeichnet, daß** eine Mehrzahl von Freikolbenvorrichtungs-Paaren vorgesehen ist.

38. Freikolbenvorrichtung nach einem der Ansprüche 34 bis 37, **dadurch gekennzeichnet, daß** zwischen den Kolbeneinrichtungen eine Versorgungsvorrichtung (172) und/oder Abführungsvorrichtung (172) angeordnet ist.

39. Freikolbenvorrichtung nach Anspruch 36, **dadurch gekennzeichnet, daß** eine Versorgungsvorrichtung (168) für die Nicht-Expansionsräume vorgesehen ist.

40. Freikolbenvorrichtung nach einem der vorangehenden Ansprüche, **dadurch gekennzeichnet, daß** ein Expansionsraum als Brennraum (58) ausgebildet ist.

41. Freikolbenvorrichtung nach Anspruch 40, **dadurch gekennzeichnet, daß** in einem Brennraum (58) Brenngase expandieren.

42. Freikolbenvorrichtung nach Anspruch 41, **dadurch gekennzeichnet, daß** Brenngase in dem Brennraum (58) erzeugt werden.

43. Freikolbenvorrichtung nach Anspruch 41, **dadurch gekennzeichnet, daß** Brenngase extern erzeugt und in den Brennraum eingekoppelt werden.

44. Freikolbenvorrichtung nach einem der Ansprüche 1 bis 39, **dadurch gekennzeichnet, daß** in einem Expansionsraum (312) ein Wärmeträgermedium expandiert.

45. Freikolbenvorrichtung nach Anspruch 44, **dadurch gekennzeichnet, daß** das Wärmeträgermedium Dampf ist.

46. Freikolbenvorrichtung nach Anspruch 44 oder 45, **dadurch gekennzeichnet, daß** das Wärmeträgermedium außerhalb des Expansionsraums (312) erzeugt wird oder dem Wärmeträgermedium außerhalb des Expansionsraums (312) Energie zugeführt wird.

47. Freikolbenvorrichtung nach einem der Ansprüche 44 bis 46, **dadurch gekennzeichnet, daß** eine Rückkühlungseinrichtung (332) von aus dem Expansionsraum abgeführten Medium vorgesehen ist.

## Claims

1. Free-piston device with an electric linear drive (66), comprising at least one linearly movable piston device (12; 126), a rotor device (36; 146) that is connected to the piston device (12; 126), a stator device (50; 152), wherein the at least one piston device (12; 126) is drivable under the action of a medium that expands in an expansion space, a first displacement space (20), in which a piston (14; 128) of the at least one piston device (12; 126), upon which the medium acts, is movable, and a second displacement space (46; 150), in which the associated rotor device (36; 146) is movable, wherein the first displacement space (20) and the second displacement space (46; 150) are separate spaces, **characterized in that** the piston device (12; 126) at one end with a first piston (14; 128) delimits an expansion space (58) and at an opposite end with a second piston (16; 130) delimits a space (65; 132), which is not an expansion space and takes the form of a spring-back space for the piston device (12; 126), and that a third displacement space (26; 136), in which the second piston (16; 130) moves, has a larger diameter than the first displacement space (20).

2. Free-piston device according to claim 1, **characterized in that** the at least one piston device (12; 126) and the rotor device (36; 146) run parallel.

3. Free-piston device according to claim 1 or 2, **characterized in that** the second displacement space (46; 150) at least partially surrounds the first displacement space (20).

4. Free-piston device according to one of the preceding claims, **characterized in that** the first displacement space (20) has a circular cross section.

5. Free-piston device according to one of the preceding claims, **characterized in that** the second displacement space (46; 150) has an annular or circular cross section.

6. Free-piston device according to one of the preceding claims, **characterized in that** an axis of symmetry (22) of the first displacement space (20) coincides with an axis of symmetry of an expansion space (58).

7. Free-piston device according to one of the preceding claims, **characterized in that** the rotor device (36; 146), which is associated with the at least one piston device (12; 126), has a transverse spacing relative to the piston device (12; 126) that is greater than the transverse extent of the first displacement space (20) in the direction of the transverse spacing.

8. Free-piston device according to claim 7, **characterized in that** the rotor device (36; 146) takes the form of an external rotor.

9. Free-piston device according to one of the preceding claims, **characterized in that** the rotor device (36; 146) is disposed symmetrically in relation to an axis (22) of the first displacement space (20).

10. Free-piston device according to one of the preceding claims, **characterized in that** the second displacement space (46; 150) comprises a plurality of sub-spaces (48a, 48b).

11. Free-piston device according to one of the preceding claims, **characterized in that** the rotor device (36; 146) comprises a plurality of sub-rotors (40; 148a, 148b), wherein each sub-rotor (40; 148a, 148b) is guided displaceably in a sub-space (48a, 48b; 150).

12. Free-piston device according to one of the preceding claims, **characterized in that** the stator device (50; 80) is disposed at the second displacement space (46).

13. Free-piston device according to one of the preceding claims, **characterized in that** the stator device (50) is disposed around the second displacement space (46) or around sub-spaces (48a, 48b) of the second displacement space (46).

14. Free-piston device according to one of claims 1 to 12, **characterized in that** the stator device (80) is disposed around the first displacement space (20).

15. Free-piston device according to one of the preceding claims, **characterized in that** a cooling means (56) is disposed between the stator device (50; 80) and the first displacement space (20).

16. Free-piston device according to one of the preceding claims, **characterized in that** a cooling means (54, 56) is disposed around the stator device (50).

17. Free-piston device according to one of the preceding claims, **characterized in that** an air gap (74) is formed between the rotor device (36; 146) and the stator device (50; 152).

18. Free-piston device according to one of the preceding claims, **characterized in that** the rotor device (36; 146) comprises one or more rows (40; 148a, 148b) of successively arranged magnet elements (42).

19. Free-piston device according to claim 18, **characterized in that** a row (40) is seated on a strip element (78), which is disposed opposite an air gap (74) facing the stator device (50).

20. Free-piston device according to claim 18 or 19, **characterized in that** flux guiding elements (44) are disposed between adjacent magnet elements (42).

21. Free-piston device according to one of the preceding claims, **characterized in that** the third displacement space (26; 136), in which the second piston (16; 130) moves, has a circular cross section.

22. Free-piston device according to one of the preceding claims, **characterized in that** second displacement space (46; 150) and third displacement space (26; 136) overlap.

23. Free-piston device according to one of the preceding claims, **characterized in that** the second piston (16; 130) has a larger surface in the direction of the non-expansion space (65; 132) than the first piston (14; 128) has in the direction of the expansion space (58).

24. Free-piston device according to one of the preceding claims, **characterized in that** the rotor device (36) is connected to the second piston (16).

25. Free-piston device according to one of the preceding claims, **characterized in that** the first piston (14) and the second piston (16) are connected by a piston rod (24).

26. Free-piston device according to one of claims 1 to 21, **characterized in that** the third expansion space (136), in which the second piston (130) moves, does not overlap the second displacement space (150).

27. Free-piston device according to claim 26, **characterized in that** the first piston (90) and the second piston (92) are formed by a common piston plate (94).

28. Free-piston device according to claim 26 or 27, **characterized in that** the piston device (88) has in the region of the second piston (92) a recess for forming the non-expansion space (112).

29. Free-piston device according to claim 28, **characterized in that** the recess (110) is formed between side walls (98) of the piston device (88), wherein the rotor device (36) is held on the piston device (88) by means of the side walls (98).

30. Free-piston device according to one of the preceding claims, **characterized in that** its longitudinal dimension is determined by the rotor device (36; 126; 146).

31. Free-piston device according to one of the preceding claims, **characterized in that** between the first displacement space (20) and the third displacement space (136) a guide space (140) is formed for a holding element (142) for connecting the rotor device (146) to the at least one piston device (126).

32. Free-piston device according to claim 31, **characterized in that** the rotor device extends in one direction away from the holding element (142).

33. Free-piston device according to claim 31, **characterized in that** the rotor device (146) extends in one direction away, and in the opposite direction away, from the holding element (142).

34. Free-piston device according to one of the preceding claims, **characterized in that** two piston devices (88', 88"; 88*, 88**) with a substantially coincident longitudinal axis (160) are oppositely disposed.

35. Free-piston device according to claim 34, **characterized in that** the first pistons (90', 90"), which delimit expansion spaces (58), face one another.

36. Free-piston device according to claim 34, **characterized in that** the second pistons (132*, 132**), which delimit non-expansion spaces, face one another.

37. Free-piston device according to one of the preceding claims, **characterized in that** a plurality of free-piston device pairs are provided.

38. Free-piston device according to one of claims 34 to 37, **characterized in that** between the piston devices a supply device (172) and/or removal device (172) is disposed.

39. Free-piston device according to claim 36, **characterized in that** a supply device (168) is provided for the non-expansion spaces.

40. Free-piston device according to the preceding claims, **characterized in that** an expansion space takes the form of a combustion chamber (58).

41. Free-piston device according to claim 40, **characterized in that** combustion gases expand in a combustion chamber (58).

42. Free-piston device according to claim 41, **characterized in that** combustion gases are generated in the combustion chamber (58).

43. Free-piston device according to claim 41, **characterized in that** combustion gases are generated externally and injected into the combustion chamber.

44. Free-piston device according to one of claims 1 to 39, **characterized in that** a heat transfer medium expands in an expansion space (312).

45. Free-piston device according to claim 44, **characterized in that** the heat transfer medium is steam.

46. Free-piston device according to claim 44 or 45, **characterized in that** the heat transfer medium is generated outside of the expansion space (312) or energy is supplied to the heat transfer medium outside of the expansion space (312).

47. Free-piston device according to one of claims 44 to 46, **characterized in that** a return cooling device (332) for medium removed from the expansion space is provided.

## Revendications

1. Piston libre avec entraînement linéaire (66) électrique, comportant au moins un dispositif à piston (12 ; 126) mobile linéairement, un dispositif à rotor (36 ; 146) qui est relié au dispositif à piston (12 ; 126), un dispositif à stator (50 ; 152), ledit au moins un dispositif à piston (12 ; 126) pouvant être entraîné sous l'action d'un produit qui est en expansion dans un espace d'expansion, un premier espace de déplacement (20), dans lequel se déplace un piston (14 ; 128) dudit au moins un dispositif à piston (12 ; 126) sur lequel le produit agit, et un deuxième espace de déplacement (46 ; 150), dans lequel se déplace le dispositif à rotor (36 ; 146) associé, le premier espace de déplacement (20) et le deuxième espace de déplacement (46 ; 150) étant des espaces séparés,
**caractérisé en ce que** le dispositif à piston (12 ; 126) délimite au niveau d'une extrémité avec un premier piston (14 ; 128) un espace d'expansion (58) et délimite au niveau d'une extrémité opposée avec un second piston (16 ; 130) un espace (65 ; 132) qui n'est pas un espace d'expansion et est réalisé comme un espace de retour élastique pour le dispositif à piston (12 ; 126) et **en ce qu'**un troisième espace de déplacement (26 ; 136), dans lequel se déplace le second piston (16 ; 130), présente un diamètre plus grand que celui du premier espace de déplacement (20).

2. Piston libre selon la revendication 1, **caractérisé en ce que** ledit au moins un dispositif à piston (12 ; 126) et le dispositif à rotor (36 ; 146) sont guidés parallèlement.

3. Piston libre selon la revendication 1 ou 2, **caractérisé en ce que** le deuxième espace de déplacement (46 ; 150) entoure au moins en partie le premier espace de déplacement (20).

4. Piston libre selon l'une quelconque des revendications précédentes, **caractérisé en ce que** le premier espace de déplacement (20) présente une section circulaire.

5. Piston libre selon l'une quelconque des revendications précédentes, **caractérisé en ce que** le deuxième espace de déplacement (46 ; 150) présente une section annulaire ou circulaire.

6. Piston libre selon l'une quelconque des revendications précédentes, **caractérisé en ce qu'**un axe de symétrie (22) du premier espace de déplacement (20) coïncide avec un axe de symétrie d'un espace d'expansion (58).

7. Piston libre selon l'une quelconque des revendications précédentes, **caractérisé en ce que** le dispositif à rotor (36 ; 146) qui est associé audit au moins un dispositif à piston (12 ; 126), présente une distance transversale par rapport au dispositif à piston (12 ; 126) qui est supérieure à l'étirement transversal du premier espace de déplacement (20) en direction de la distance transversale.

8. Piston libre selon la revendication 7, **caractérisé en ce que** le dispositif à rotor (36 ; 146) est réalisé comme un rotor extérieur.

9. Piston libre selon l'une quelconque des revendications précédentes, **caractérisé en ce que** le dispositif à rotor (36 ; 146) est disposé de manière symétrique par rapport à un axe (22) du premier espace de déplacement (20).

10. Piston libre selon l'une quelconque des revendications précédentes, **caractérisé en ce que** le deuxième espace de déplacement (46 ; 150) comporte une pluralité d'espaces partiels (48a, 48b).

11. Piston libre selon l'une quelconque des revendications précédentes, **caractérisé en ce que** le dispositif à rotor (36 ; 146) comporte une pluralité de rotors partiels (40 ; 148a, 148b), chaque rotor partiel (40 ; 148a, 148b) étant guidé de manière mobile dans un espace partiel (48a, 48b ; 150).

12. Piston libre selon l'une quelconque des revendications précédentes, **caractérisé en ce que** le dispositif à stator (50 ; 80) est disposé sur le deuxième espace de déplacement (46).

13. Piston libre selon l'une quelconque des revendications précédentes, **caractérisé en ce que** le dispositif à stator (50) est disposé autour du deuxième espace de déplacement (46) ou autour d'espaces partiels (48a, 48b) du deuxième espace de déplacement (46).

14. Piston libre selon l'une quelconque des revendications 1 à 12, **caractérisé en ce que** le dispositif à stator (80) est disposé autour du premier espace de déplacement (20).

15. Piston libre selon l'une quelconque des revendications précédentes, **caractérisé en ce qu'**un refroidissement (56) est disposé entre le dispositif à stator (50 ; 80) et le premier espace de déplacement (20).

16. Piston libre selon l'une quelconque des revendications précédentes, **caractérisé en ce qu'**un refroidissement (54, 56) est disposé autour du dispositif à stator (50).

17. Piston libre selon l'une quelconque des revendications précédentes, **caractérisé en ce qu'**un entrefer (74) est formé entre le dispositif à rotor (36 ; 146) et le dispositif à stator (50 ; 152).

18. Piston libre selon l'une quelconque des revendications précédentes, **caractérisé en ce que** le dispositif à rotor (36 ; 146) comporte une ou plusieurs rangées (40 ; 148a, 148b) d'éléments magnétiques (42) disposés les uns derrière les autres.

19. Piston libre selon la revendication 18, **caractérisé en ce qu'**une rangée (40) loge sur un élément à barre (78) qui est disposé à l'opposé d'un entrefer (74) tourné vers le dispositif à stator (50).

20. Piston libre selon la revendication 18 ou 19, **caractérisé en ce que** des éléments conducteurs de flux (44) sont disposés entre des éléments magnétiques (42) contigus.

21. Piston libre selon l'une quelconque des revendications précédentes, **caractérisé en ce que** le troisième espace de déplacement (26 ; 136), dans lequel se déplace le second piston (16 ; 130) présente une section circulaire.

22. Piston libre selon l'une quelconque des revendications précédentes, **caractérisé en ce que** le deuxième espace de déplacement (46 ; 150) et le troisième espace de déplacement (26 ; 136) se chevauchent.

23. Piston libre selon l'une quelconque des revendications précédentes, **caractérisé en ce que** le second piston (16 ; 130) présente une surface plus grande vers l'espace de non expansion (65 ; 132) que le premier piston (14 ; 128) vers l'espace d'expansion (58).

24. Piston libre selon l'une quelconque des revendications précédentes, **caractérisé en ce que** le dispositif à rotor (36) est relié au second piston (16).

25. Piston libre selon l'une quelconque des revendications précédentes, **caractérisé en ce que** le premier piston (14) et le second piston (16) sont reliés par une tige de piston (24).

26. Piston libre selon l'une quelconque des revendications 1 à 21, **caractérisé en ce que** le troisième espace de déplacement (136), dans lequel se déplace le second piston (130), ne chevauche pas le deuxième espace de déplacement (150).

27. Piston libre selon la revendication 26, **caractérisé en ce que** le premier piston (90) et le second piston (92) sont formés par une plaque à piston (94) commune.

28. Piston libre selon la revendication 26 ou 27, **caractérisé en ce que** le dispositif à piston (88) présente un évidement dans la zone du second piston (92) pour la formation de l'espace de non expansion (112).

29. Piston libre selon la revendication 28, **caractérisé en ce que** l'évidement (110) est formé entre des parois latérales (98) du dispositif à piston (88), le dispositif à rotor (36) est maintenu par les parois latérales (98) sur le dispositif à piston (88).

30. Piston libre selon l'une quelconque des revendications précédentes, **caractérisé en ce que** sa longueur est déterminée par le dispositif à rotor (36 ; 126 ; 146).

31. Piston libre selon l'une quelconque des revendications précédentes, **caractérisé en ce qu'**un espace de guidage (140) pour un élément de retenue (142) est formé entre le premier espace de déplacement (20) et le troisième espace de déplacement (136) pour la liaison du dispositif à rotor (146) avec ledit au moins un dispositif à piston (126).

32. Piston libre selon la revendication 31, **caractérisé en ce que** le dispositif à rotor s'étend dans une direction éloignée de l'élément de retenue (142).

33. Piston libre selon la revendication 31, **caractérisé en ce que** le dispositif à rotor (146) s'étend dans une direction et dans la direction opposée éloignées de l'élément de retenue (142).

34. Piston libre selon l'une quelconque des revendications précédentes, **caractérisé en ce que** deux dispositifs à piston (88', 88", 88*, 88**) avec un axe longitudinal (160) essentiellement coïncident sont disposés à l'opposé.

35. Piston libre selon la revendication 34, **caractérisé en ce que** les premiers pistons (90', 90") qui délimitent des espaces d'expansion (58), sont tournés l'un vers l'autre.

36. Piston libre selon la revendication 34, **caractérisé en ce que** les seconds pistons (132*, 132**) qui délimitent des espaces de non expansion, sont tournés l'un vers l'autre.

37. Piston libre selon l'une quelconque des revendications précédentes, **caractérisé en ce que** l'on prévoit une pluralité de paires de pistons libres.

38. Piston libre selon l'une quelconque des revendications 34 à 37, **caractérisé en ce qu'**un dispositif d'alimentation (172) et/ou un dispositif d'évacuation (172) est disposé entre les dispositifs à piston.

39. Piston libre selon la revendication 36, **caractérisé en ce que** l'on prévoit un dispositif d'alimentation (168) pour les espaces de non expansion.

40. Piston libre selon l'une quelconque des revendications précédentes, **caractérisé en ce qu'**un espace d'expansion est réalisé comme un espace de combustion (58).

41. Piston libre selon la revendication 40, **caractérisé en ce que** des gaz combustibles sont en expansion dans un espace de combustion (58).

42. Piston libre selon la revendication 41, **caractérisé en ce que** des gaz combustibles sont générés dans l'espace de combustion (58).

43. Piston libre selon la revendication 41, **caractérisé en ce que** des gaz combustibles sont générés en externe et injectés dans l'espace de combustion.

44. Piston libre selon l'une quelconque des revendications 1 à 39, **caractérisé en ce qu'**un produit caloporteur est en expansion dans un espace d'expansion (312).

45. Piston libre selon la revendication 44, **caractérisé en ce que** le produit caloporteur est de la vapeur.

46. Piston libre selon la revendication 44 ou 45, **caractérisé en ce que** le produit caloporteur est généré en dehors de l'espace d'expansion (312) ou de l'énergie est amenée au produit caloporteur en dehors de l'espace d'expansion (312).

47. Piston libre selon l'une quelconque des revendications 44 à 46, **caractérisé en ce que** l'on prévoit un dispositif de refroidissement de retour (332) de produit évacué de l'espace d'expansion.
